(19) Europäisches Patentamt / European Patent Office / Office européen des brevets

(11) **EP 1 676 116 B1**

(12) **EUROPÄISCHE PATENTSCHRIFT**

(45) Veröffentlichungstag und Bekanntmachung des Hinweises auf die Patenterteilung:
**30.05.2012   Patentblatt 2012/22**

(21) Anmeldenummer: **04791269.6**

(22) Anmeldetag: **21.10.2004**

(51) Int Cl.:
**G01N 1/28** *(2006.01)*

(86) Internationale Anmeldenummer:
**PCT/EP2004/052600**

(87) Internationale Veröffentlichungsnummer:
**WO 2005/040762 (06.05.2005 Gazette 2005/18)**

(54) **VERFAHREN ZUR AUTOMATISCHEN ERZEUGUNG VON LASER-SCHNITTLINIEN IN DER LASER-MIKRODISSEKTION**

METHOD FOR AUTOMATIC PRODUCTION OF LASER CUTTING LINES IN LASER MICRO-DISSECTION

PROCEDE DE GENERATION AUTOMATIQUE DE LIGNES DE DECOUPE LASER LORS D'UNE MICRODISSECTION LASER

(84) Benannte Vertragsstaaten:
**DE ES FR GB IT**

(30) Priorität: **21.10.2003   DE 10349411
21.10.2004   DE 102004051508**

(43) Veröffentlichungstag der Anmeldung:
**05.07.2006   Patentblatt 2006/27**

(73) Patentinhaber: **Leica Microsystems CMS GmbH
35578 Wetzlar (DE)**

(72) Erfinder:
  • **SIECKMANN, Frank
    44879 Bochum (DE)**
  • **JOHANNSEN, Gerhard
    35435 Wettenberg (DE)**

(74) Vertreter: **Reichert, Werner Franz
Leica Microsystems GmbH
Corporate Patents and Trademarks
Ernst-Leitz-Strasse 17-37
35578 Wetzlar (DE)**

(56) Entgegenhaltungen:
**DE-A1- 19 636 074      US-A- 4 741 043
US-A- 5 843 657      US-A- 5 998 129
US-A1- 2002 090 122      US-A1- 2002 164 678**

• **SCHACHTER B J ET AL: "Some Experiments in Image Segmentation by Clustering of Local Feature Values" PATTERN RECOGNITION, ELSEVIER, KIDLINGTON, GB, Bd. 11, 1979, Seiten 19-28, XP002269476 ISSN: 0031-3203**
• **ANONYMOUS: "Laser Capture Microdissection Systems" PRODUCT SPECIFICATION, [Online] Juli 2003 (2003-07), XP002315059 Gefunden im Internet: URL:www.arctur.com> [gefunden am 2005-01-25]**

**Beschreibung**

Die Erfindung betrifft ein Verfahren mit den Merkmalen des Oberbegriffs des Anspruchs 1. Die Unteransprüche geben vorteilhafte Ausgestaltungen an.

Laser-Mikrodissektions-Systeme dienen der Extraktion von ausgewählten mikroskopischen Objekten in biologischen Präparaten mittels eines von einem Laser erzeugten Laser-Strahls. Das in ausreichender Menge extrahierte Material (die gesammelten Dissektate) wird anschließend weiteren biochemischen Analyseschritten zugeführt. Die Laser-Mikrodissektions-Systeme werden derzeit überwiegend im medizinisch-biologischen Bereich eingesetzt.

Ein gattungsgemäßes Verfahren ist aus der US-A-5 998 129 bekannt. Ein Verfahren zur Laser-Mikrodissektion und ein solches Laser-Mikrodissektions-System beschreiben auch die DE 100 43 506 C1 und die DE 100 18 251 C2. Ein solches Laser-Mikrodissektions-System setzt sich aus mehreren, präzise aufeinander abgestimmten Komponenten zusammen. Die zentrale Komponente ist ein in vielen Funktionen motorisiertes Mikroskop mit einem elektronisch verstellbaren x-y-Tisch zur Aufnahme des zu bearbeitenden Präparats. Der in einer Lagereinheit erzeugte Laserstrahl wird über ein optisches System mit integrierter Strahlablenkung in den Strahlengang des Mikroskops eingekoppelt und wird zum Schneiden durch das Mikroskopobjektiv auf unterschiedliche Stellen des ortsfesten Präparats gelenkt. In einer anderen Ausführungsform wird der Laserstrahl ortsfest gehalten und das Präparat mittels des x-y-Tisches relativ dazu bewegt. Alle Steuerfunktionen werden von einem geeignet ausgelegten Programm, das auf einem angeschlossenen Computer läuft, ausgeführt. Über eine an das Mikroskop adaptierte Kamera wird der im Mikroskop sichtbare Bildausschnitts des Präparats auf den Computer-Bildschirm zur Darstellung gebracht. Durch Ziehen der Computer-Maus kann der Benutzer ausgewählte Präparatbereiche mit einer Zeichenlinie umranden, die nachfolgend als Soll-Schnittlinie bezeichnet wird. Jede so gezeichnete Linie ist gekennzeichnet durch eine Folge von x-y-Punktkoordinaten, die relativ zu den Bildschirmkoordinaten definiert sind. Nach Auslösung des Schneidbefehls wird der Laserstrahl durch eine geeignete x-y-Abbildungsvorrichtung so gesteuert, dass die zuvor definierte Zeichenlinie auf das Präparat derart abgebildet wird, dass eine maßstabsgetreue, affine Abbildung der Bildschirmlinie auf dem Präparat abgefahren wird. Mit geeignet eingestelltem Laserstrahl wird somit ein Ausschneiden der vorher manuell markierten Objekte erreicht. Wie in der DE 10018 251 C2 beschrieben, erlaubt das System für die Weiterverarbeitung das selektive Sammeln der Dissektate in einem standardisierten kleinen Behälter unterhalb der Schnittebene, wobei mehrere Behälter zur Auswahl stehen und automatisch in die Auffangposition gefahren werden können.

Das bekannte Verfahren zur Laser-Mikrodissektion weist jedoch den Nachteil auf, dass die vom Benutzer vorgenommene Markierung der auszuschneidenden Objekte aufwendig, zeitintensiv und fehlerträchtig ist. Dies gilt insbesondere dann, wenn eine relativ umfangreiche Menge an Dissektaten für die nachfolgenden Analyseschritte erforderlich ist. Hier spielen insbesondere Ermüdungserscheinungen und andere Einflüsse auf den Benutzer eine nicht unerhebliche Rolle.

Es ist daher Aufgabe der vorliegenden Erfindung, ein Verfahren zur Laser-Mikrodissektion anzugeben, welches möglichst fehlerfrei einen hohen Präparate-Durchsatz ermöglicht.

Diese Aufgabe wird gelöst durch ein gattungsgemäßes Verfahren zur Laser-Mikrodissektion mit den kennzeichnenden Merkmalen des Anspruchs 1. Bei dem Verfahren wird zunächst ein elektronisches Bild (Grauwertbild oder Farbbild) zumindest eines Bildausschnittes des Präparats aufgenommen. Danach wird der Bildausschnitt bildanalytisch bearbeitet, wobei das auszuschneidende Objekt bildanalytisch ermittelt wird. Anschließend wird für das ermittelte objekt über eine automatische konturberechnung eine individuelle und geschlossene Begrenzungslinie erzrgt, aus der die Soll-Schnittlinie um das auszuschneidende Objekt automatisch bestimmte wird. Anschließend kann, vom Benutzer ausgelöst, das Objekt entlang der Soll-Schnittlinie mittels eines Laserstrahls ausgeschnitten werden.

In einer vorteilhaften Ausgestaltung des Verfahrens werden in einem zusätzlichen Verfahrensschritt aus der automatisch bestimmten Soll-Schnittlinie ebenfalls automatisch Steuersignale für eine Relativbewegung zwischen Laserstrahl und Präparat abgeleitet. Daraufhin wird die Laserschnittlinie automatisch, ohne Eingriff des Benutzers, erzeugt.

Die Erfindung löst die angesprochenen Nachteile durch konsequente Anwendung von bildanalytischen Methoden und einem wesentlich erhöhten Automatisierungsgrad des Mikroskops. Die Automatisierung betrifft in erster Linie die Positionierung des zu untersuchenden Präparatebereichs über den elektronisch verstellbaren Tisch.

Für einen besonders hohen Automatisierungsgrad und eine deutliche Erhöhung des Probendurchsatzes wird in einer weiteren Ausgestaltung des Verfahrens im zugeordneten Applikationsprogramm eine sogenannte Mäanderfunktion definiert, die im Routinebetrieb für den korrekten Vorschub des Tisches mit dem Präparat sorgt. Dabei wird das Präparat automatisch mäanderförmig, Bildfeld für Bildfeld verfahren, so dass schrittweise ein vom Benutzer gewählter Präparatebereich vollständig mit der Kamera erfasst wird. Im Einstellmodus des Systems lassen sich zum einen die Grenzen des interessierenden Präparatebereichs sowie die Vergrößerung des Mikroskopobjektivs definieren, welches das Bildfeld in seiner Größe festlegt. Zum anderen lassen sich Art und Einstellungen eines Fokussier-Systems definieren, mit dessen Hilfe während der automatischen Vorschubbewegung des Tisches für die notwendige Schärfeeinstellung der zu bearbeitenden Bilder gesorgt wird. In Verbindung mit der Mäanderfunktion erlaubt dieses Verfahren eine vollautomatische Bearbeitung des Präparates, ohne dass ein Eingriff durch den Benutzer erforderlich ist,

Nach jedem automatischen Erreichen einer neuen Präparateposition wird mit der Kamera ein Bild aufgenommen. Jedes aufgenommene Bild wird mit bildanalytischen Methoden daraufhin untersucht, ob Objekte enthalten sind, deren charakteristische Merkmale mit zuvor eingelernten Merkmalen übereinstimmen, wobei der Übereinstimmungsgrad einstellbar ist. Bei ausreichender Übereinstimmung wird das Objekt erkannt und markiert. Für alle erkannten Objekte erfolgt über eine automatische Konturberechnung die Erzeugung einer individuellen und geschlossenen Begrenzungslinie. Diese Begrenzungslinie wird durch eine Matrixtransformation formerhaltend so ‚aufgeweitet', dass sie das Objekt in einem größeren Abstand als Soll-Schnittlinie umschließt. Diese Vorgehensweise erlaubt es, die endliche Schnittdicke des Laserstrahls zu berücksichtigen. Jede so gewonnene Soll-Schnittlinie ist gekennzeichnet durch eine Folge von x-y-Punktkoordinaten, die relativ zu den Bildschirmkoordinaten definiert sind. Durch eine geeignete x-y-Abbildungsvorschrift wird eine maßstabsgetreue, affine Abbildung der Schnittlinie generiert, die zur entsprechenden Auslenkung des Laserstrahls benötigt wird.

Nach Bearbeitung des vorliegenden Bildes in der beschriebenen Art, wird mit Hilfe der automatischen Vorschubbewegung des Tisches das Präparat auf das nächste Bildfeld positioniert und analysiert. Ein wählbares Auffangbehältnis wird automatisch in die Auffangposition gefahren. Dieser Vorgang wiederholt sich solange, bis der definierte Präparatebereich abgearbeitet oder eine zuvor eingestellte Zahl von Objekten ausgeschnitten wurde. Nach dem Schneiden hinterlässt jedes ausgeschnittene Objekt ein Loch im Präparat genau dann, wenn der Ausschneidevorgang vollständig erfolgreich war. Das Loch entspricht in etwa der Fläche des zuvor detektierten Objektes (innerhalb der Konturlinie) ohne die Laserschnittdicken-Erweiterung.

Daher ist ein Flächenvergleich des per Bildanalyse detektierten Schnittlochs mit der Fläche des zuvor detektierten Objektes ein probates Mittel für die binäre Beurteilung des Schnittes.

Der Vorteil des erfindungsgemäßen Verfahrens besteht darin, dass nach einmal erfolgter Einstellung das System ohne weitere Überwachung durch einen Benutzer arbeitet. Das angegebene Verfahren führt damit zu einem deutlich gesteigerten Probendurchsatz bei gleichzeitiger Erhöhung der Robustheit und Zuverlässigkeit. Da die einmal erprobten Merkmals-Datensätze gespeichert werden können, führt dies zu absolut reproduzierbaren Bedingungen bei der Verwendung gleichartiger Präparate. Gerade bei statistischen Messungen ist diese Reproduzierbarkeit unbedingte Voraussetzung für einen guten Vertrauensbereich der Ergebnisse.

Durch die Verwendung mehrerer Merkmals-Datensätze ist es zudem möglich, unterschiedliche Objekttypen innerhalb eines Präparates in einem Arbeitsgang zu erkennen und auszuschneiden. Da für das Auffangen der Dissektate mehrere Behältnisse unterhalb der Schnittebene zur Auswahl stehen, lassen sich unterschiedliche Objekttypen auch in verschiedenen Behältnissen sammeln.

Das System kann die Merkmals-Datensätze natürlich auch über einen Datenbankserver und/oder ein beliebiges Netzwerk (LAN = Local Area Network, WLAN = Wireless Local Area Network (Funknetz), Bluetooth, TCP/IP, Internet), aber auch über beliebige Medien in gedruckter oder elektronischer Form verteilen oder einlesen. Damit wird die Synchronisation mehrere Laser-Mikrodissektions-Systeme in einem Netzwerkverbund ermöglicht. Gerade bei statistisch vorgegebenen umfangreichen Prüfmengen, die unter Zeitdruck erfolgen müssen, erlaubt das Clustern und synchronisieren mehrerer Laser-Mikrodissektions-Systeme über ein Netzwerk mittels gleichgeschalteter Merkmals-Datensätzen die Lösung dieser Aufgabe.

Die Erfindung wird nachfolgend anhand der schematischen Zeichnung ausführlicher beschrieben. Es zeigen:

Fig. 1.1:     Merkmalsraum zur Klassifizierung der Objekte

Fig. 1.2:     Flussdiagramm des Verfahrensablaufs

Fig. 1.3:     Zusammenfassen von Objekten in sogenannten Clustern

Fig. 1.4:     Cluster mit innenliegendem Loch

Fig. 1.5:     Bildausschnitt mit Binärobjekt

Fig. 1.6:     vier mit unterschiedlichen Grauwerten gelabelte Objekte

Fig. 1.7:     Freeman-Code und Objekt mit Codierung der Randpixel

Fig. 2:       Laser-Mikrodissektions-Vorrichtung zur Durchführung des Verfahrens

Um Objekte in einem Bild automatisch zu klassifizieren, kann man bildanalytische Verfahren einsetzten. Bildanalytisch gestützte Analysen basieren gewöhnlich auf einer Merkmalsanalyse. Bei dieser Vorgehensweise nutzt man die Tatsache, dass jedes Objekt über eine gewisse Anzahl individueller Merkmale erkannt und klassifiziert werden kann.

Merkmale können z.B. Größen wie Fläche, Umfang, Durchmesser, Masse, Textur, Farbe, Form etc. sein. Indem man einen geeigneten Satz von Merkmalen auswählt, kann man ein Objekt klassifizieren und gegen andere Objekte abgrenzen.

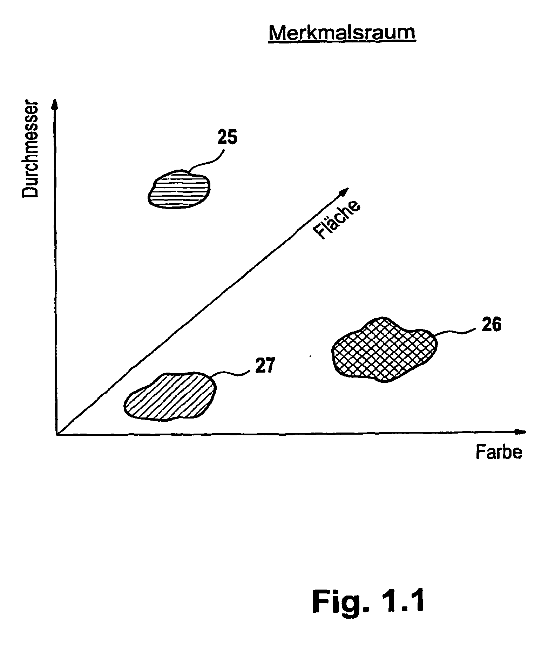

Diesen geeigneten Satz von Merkmalen trägt man gewöhnlich in einem n - dimensionalen Merkmalsraum auf. In **Fig. 1.1** wurde exemplarisch ein Merkmalsraum mit den Merkmalen Farbe, Fläche und Durchmesser gewählt. Objekte mit "wenig" Farbe und einem kleinen Durchmesser und einer kleinen Fläche werden dann z.B. durch den Merkmals-Cluster 27, der ein "Objekt 3" beschreibt, klassifiziert. Dagegen wird "Objekt 2", das durch den Merkmals-Cluster 26 erfasst wird, dadurch unterschieden, dass es viel Farbe und einen geringen Durchmesser sowie eine kleine Fläche hat. "Objekt 1", das durch den Merkmals-Cluster 25 beschrieben wird, hingegen verfügt über weniger Farbe und einen großen Durchmesser sowie eine große Fläche. Gemäß **Fig. 1.1** können wir also drei Objekte unterscheiden.

Tab 1.1: (Beispiel) Objektklassifikation anhand von Objektmerkmalen

|  | Farbe | Umfang ($\mu$m) | Fläche ($\mu$m$^2$) |
| --- | --- | --- | --- |
| Objekt 1 | wenig | groß | groß |
| Objekt 2 | viel | klein | klein |
| Objekt 3 | wenig | klein | klein |

Es kann vorkommen, dass sich die Merkmalsbereiche von zwei Objekten überschneiden und sich daher keine eindeutige Zuordnung der Merkmale zu dem einen oder dem anderen Objekt treffen lässt. In diesem Fall kann eine eindeutige Zuordnung durch Hinzunahme von weiteren, neuen Merkmalen erwirkt werden.

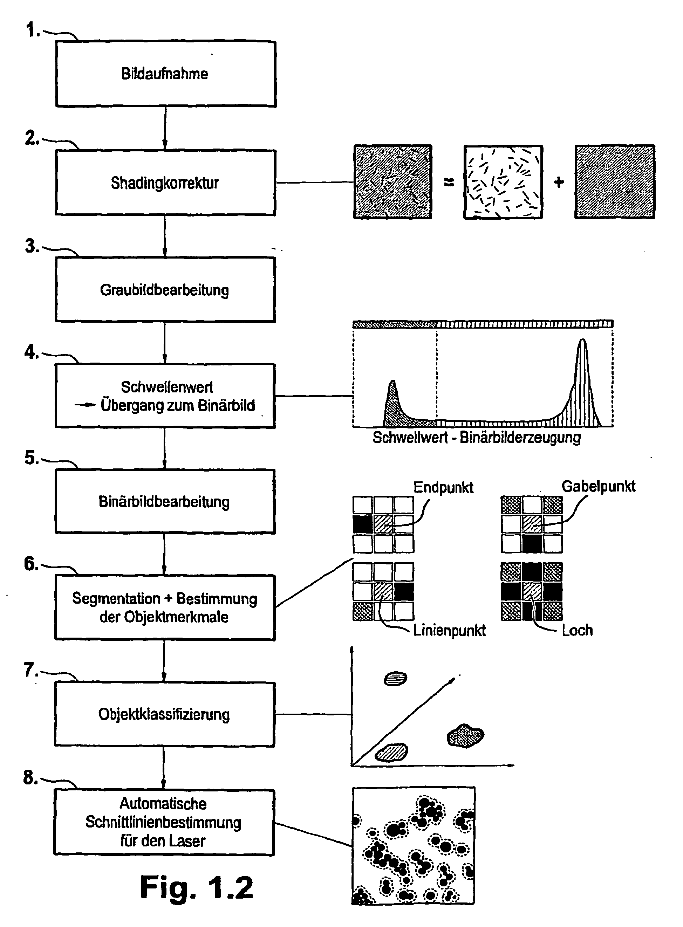

Objektmerkmale werden durch bildanalytische Berechnungen ermittelt. Der vollständige Ablauf einschließlich der Ermittlung der Objektmerkmale lässt sich in verschiedene Teilschritte zerlegen. Das Flussdiagramm einer vorteilhaften Ausgestaltung des Verfahrens ist in **Fig. 1.2** gezeigt. Es zeigt folgende Schritte 1 bis 8:

### 1. Bildaufnahme:

Zunächst wird das Bild mittels einer geeigneten Vorrichtung, z.B. einem Mikroskop mit adaptierter Kamera aufgenommen, wobei die Kamera eine analoge oder eine digitale Kamera sein kann. Je nach Art der zu klassifizierenden Objekte kann eine Farb- oder eine Grauwertkamera zum Einsatz kommen.

### 2. Shading-Korrektur:

Dieses Bild kann dann zunächst automatisch shading-korrigiert werden, d.h. dieser Schritt ist optional. Dabei wird der Tatsache Rechnung getragen, dass die Bildqualität durch eine nichthomogene Ausleuchtung des Bildfeldes bereits durch die Beleuchtung verfälscht wird. Dieses Problem wird im vorliegenden Fall gelöst durch die automatische Verwendung eines Shadingbildes, welches zuvor automatisch oder manuell erfasst und abgespeichert wurde. Dabei fährt der Objektträgertisch an eine sogenannte Leerposition, die sich dadurch auszeichnet, dass das System an dieser Stelle ein unverfälschtes Bild der Beleuchtungsverteilung mit unbelegtem Objektträger aufnehmen kann. Dieses Bild ist unverfälscht, da sich zwischen Objektiv und Beleuchtungsquelle kein biologisches Material auf dem Objektträger befindet. Dieses Korrekturbild wird dann später auf alle unter den gleichen optischen Bedingungen aufgenommenen Bilder angewendet zum Zwecke der automatischen Korrektur des Shading-Einflusses durch die Inhomogenität der Präparat-Ausleuchtung.

### 3. Graubildverarbeitung:

Dem Schema in **Fig. 1.2** entsprechend schließt sich nun der Schritt "Grauwertbearbeitung" an, wobei auch die besagte Shading-Korrektur bereits als Grauwertbearbeitung verstanden werden könnte. In diesem Schritt werden zunächst kleinere Artefakte im Bild durch Grauwertmorphologie beseitigt.

### 4. Schwellenwert und Übergang zum Binärbild:

Es sind verschiedene bildanalytische Verfahren zur Schwellenwert-Bestimmung bekannt. Um ein möglichst robustes Verfahren zu bekommen, kann der optimale Schwellenwert für den Übergang vom Grauwertbild zum Binärbild, was üblicherweise als Segmentation bezeichnet wird, vorzugsweise durch eine sogenannte Entropiemaximierung ermittelt werden. Die Idee bei der Entropiemaximierung ist die Ermittlung eines Schwellwertes (Threshold) im Grauwerthistogramm des Bildes derart, dass sich das durch die Anwendung dieses Schwellwertes ergebene Binärbild eine möglichst große Entropie aufweist. Wie z.B. aus H. Rohling, "Einführung in die Informations-und Codierungstheorie", Teubner Verlag 1995, bekannt, ist der Entropiegehalt das Maß für den Informationsgehalt eines Bildes. Durch die Bestimmung des Schwellwertes mittels Entropiemaximierung bekommt man daher ein Binärbild mit maximal möglichem Informationsgehalt.

Dieses Verfahren eignet sich gut für die automatische Segmentation, also die automatische Extraktion von Bildobjekten aus einem Bild. Einzelheiten zur Segmentation werden in Grundlehrbüchern zur Bildverarbeitung beschrieben, beispielsweise in dem Buch von Sierra, J. , "Image Analysis and Mathematical Morphology", Academic Press, 1988.

Bei dem vorgestellten Verfahren ist die Segmentation von Bildobjekten eine Voraussetzung für die Berechnung der Laserschnittlinie, d.h. der Linie, entlang derer der Laser bei dem Laser-Mikrodissektions-Verfahren geführt wird. Bei schwierig zu segmentierenden Bildobjekten kann der Benutzer zudem auch auf manuelle Weise einen Schwellenwert zur Binärbilderzeugung angeben, indem er für jeden Farbkanal getrennt einen Schwellenwert festlegt.

### 5. Binärbildverarbeitung:

Gemäß **Fig. 1.2** schließt sich nun als weiterer Schritt die Binärbildverarbeitung an. Hier werden kleinere Artefakte (Einzelpixel, kleine Pixelkluster etc.) aus dem Bild entfernt. Diese Vorgehensweise soll erfindungsgemäß dazu führen, dass kleine Objekte mit einem Durchmesser, der für das LaserschnittVerfahren zu klein ist, vor dem Schneiden eliminiert werden. Dabei ist der Wert, ab welchem ein Objekt für das Laserschnittverfahren als zu klein erachtet wird, einstellbar. Hierbei kann die bildanalytisch bekannte Morphologie genutzt werden. Die bildanalytische Morphologie wird ausführlich behandelt in Serra, J. , "Image Analysis and Mathematical Morphology", Academic Press, 1988. Im beschriebenen Verfahren wird speziell die Erosion als spezieller bildmorphologischer Filter eingesetzt. Durch Wahl der Größe des morphologischen Operators (SE = strukturierendes Element, Begriff aus der mathematischen Morphologie) oder aber äquivalent durch die Anzahl der Zyklen, mit der ein SE bestimmter Größe auf das Binärbild angewendet wird, kann der Benutzer einstellen, welche Teilchengrößen vor dem Laserschnitt ausgeschlossen werden sollen. Zudem kann man unter Ausnutzung der Möglichkeiten der bildanalytischen Morphologie auch ganz bestimmte Formen, also nicht nur Objektgrößen, sondern auch Objekte mit bestimmten Formen, aus dem Bild herausfiltern. So gelingt z.B. das Ignorieren von lanzettartigen kleinen Objekten, während kleine runde Objekte ungefiltert dem Schneideprozeß zugeführt werden.

### 6. Segmentation und Bestimmung der Objektmerkmale:

In diesem Analyseschritt werden zunächst die Objektmerkmale jedes segmentierten Objekts ermittelt (sogenannte Merkmalsextraktion). Die Merkmale, die zur Objektklassifizierung herangezogen werden, werden aus dem Binärbild bestimmt und nachfolgend Klassifikationsmerkmale genannt. Zu den klassifizierbaren Merkmalen gehören alle Merkmale, die derzeit mittels Bildanalyse gemessen werden können oder die aus a priori Wissen abgeleitet werden können sowie jegliche Linearkombination der Parameter. Merkmale sind z.B. Fläche, konvexe Fläche, äquivalenter Durchmesser, Länge, Breite, Winkel, Orientierung, Rundheit, Längen-Breiten-Verhältnis, Ausbauchung, Farbwerte in RGB-Metrik oder jeder anderen Farbmetrik, Kurvenlänge, Kurvenbreite, horizontale und vertikale Projektion, Textur, Energie etc..

Als ein sehr wichtiges Merkmal stellt sich die Position des sogenannten FCP, des Feature Count Points (ein wohl definierter Startpunkt zur Beschreibung der Lage eines Objektes), dar. Unter dem FCP versteht man ein ausgezeichnetes Randpixel im Binärbild, z.B. jenes Pixel, welches das unterste, rechteste Pixel im Binärobjekt ist oder aber jenes, welches das oberste, am weitesten links liegende Pixel ist. Es dient gewissermaßen als Startpunkt für die Kontur um jedes Binärobjekt.

Nach der Vermessung der Objekte im Binärbild liegt eine Liste mit den Merkmalen aller Objekte vor.

Tab 1.2: (Beispiel) Merkmale die zu allen Binärbildobjekten gemessen wurden

|  | FCP X | FCP Y | Fläche ($\mu m^2$) | Länge ($\mu m$) | Rundheit | .... weitere |
|---|---|---|---|---|---|---|
| Objekt 1 | 10 | 23 | 10 | 23 | 1.2 | ... |
| Objekt 2 | 26 | 123 | 100 | 433 | 1.4 | ... |
| Objekt 3 | 234 | 28 | 4711 | 345 | 2.5 | ... |
| Objekt 4 | 165 | 278 | 2364 | 9721 | 1.8 | ... |
| ... |  |  |  |  |  | ... |
| Objekt n | 276 | 345 | 1254 | 3453 | 2.3 | ... |

**7. Objektklassifizierung :**

Der nächste Schritt besteht in einem Vergleich der extrahierten Objektmerkmale mit den vorgegebenen Klassifikationsmerkmalen. Dazu werden die Kombinationen der gemessenen Objektmerkmale der mit dem Laser auszuschneidenden Objekte mit den Werten der Klassifikationsmerkmale auf Übereinstimmung geprüft. Auf diese Weise werden die gewünschten, auszuschneidenden Objekte von den nicht gewünschten Objekten unterschieden. Da für die gewünschten Objekte des gleichen Typs eine Anzahl charakterisierender Merkmale festgelegt wurde und da für Objekte eines anderen Typs andere Merkmale festgelegt wurden, können alle Objekte eindeutig einen solchen Typ zugeordnet werden oder als Ausschuss, also nicht brauchbar, klassifiziert werden. Die nicht brauchbaren Objekte werden dann ausgesondert und damit auch nicht ausgeschnitten.

Nachfolgend wird ein Beispiel hierzu gegeben:

Tab 1.3: (Beispiel) Objektidentifikation über Merkmalsbereiche

| | Gemessene Fläche ($\mu$m$^2$) | Vergleichswert der Fläche ($\mu$m$^2$) | Beurteilung, ob das Objekt ausgeschnitten werden soll |
|---|---|---|---|
| Objekt 1 | 10 | 5... 500 | 10 innerhalb Intervall [5,500] = ausschneiden |
| Objekt 2 | 100 | 5... 500 | 100 innerhalb Intervall [5,500] = ausschneiden |
| Objekt 3 | 4711 | 5... 500 | 4711 außerhalb Intervall [5,500] = NICHT ausschneiden |
| Objekt 4 | 2364 | 5 ... 500 | 2364 außerhalb Intervall [5,500] = NICHT ausschneiden |
| ... | | | ... |
| Objekt n | 1254 | 5 ... 500 | 1254 außerhalb Intervall [5,500] = NICHT ausschneiden |

In **Tab 1.3** ist wird jede gemessene Objektfläche mit einem Flächenwertebereich verglichen. Im Beispiel wird ein Objekt dann identifiziert, wenn seine gemessene Fläche innerhalb der vorgegebenen Vergleichswerte oder Grenzwerte liegt. Ist der Vergleich Wahr, ist also die gemessene Fläche (z.B. 10 $\mu$m$^2$) innerhalb des Wertebereichs [5 $\mu$m$^2$, 500 $\mu$m$^2$], so wird das Objekt akzeptiert und letztlich durch den Laser ausgeschnitten. Formal lässt sich also sagen:

$$\text{wenn } F_{gemessen} \in \text{Wertebereich} \Rightarrow \text{dann Teilchen ausschneiden,}$$

$$\text{wenn } F_{gemessen} \notin \text{Wertebereich} \Rightarrow \text{dann Teilchen \underline{nicht} ausschneiden,}$$

wobei F die Fläche des Objekts bedeutet. Natürlich kann der Benutzer auch andere Kriterien zum Ausschneiden definieren.

So können natürlich auch Objekte, die sich nicht im Wertebereich befinden, per Laser ausgeschnitten werden:

$$\text{wenn } F_{gemessen} \notin \text{Wertebereich} \Rightarrow \text{dann Teilchen ausschneiden}$$

$$\text{wenn } F_{gemessen} \in \text{Wertebereich} \Rightarrow \text{dann Teilchen \underline{nicht} ausschneiden}$$

Führt man folgende Schreibweise ein

$$FW = F \; ist \; im \; Wertebereich \; ; \; \overline{FW} = F \; nicht \; ist \; im \; Wertebereich \; ;$$

so wird deutlich, dass man jede Kombination von gemessenen Merkmalen, jeweils mit einem individuellen Wertebereich versehen, dazu verwenden kann, ein Kriterium festzulegen, welches es erlaubt, bestimmte Objekte in dem Präparat für das Ausschneiden zu identifizieren.

Tab 1.4: (Beispiel) Verschiedene Merkmale im Wertebereich, der zuvor definiert wurde

| FW | Fläche im Wertebereich |
|---|---|
| RW | Rundheit im Wertebereich |
| LW | Länge im Wertebereich |
| CW | Farbe (Color) im Wertebereich |
| ... | ... weitere Merkmale im Wertebereich ... |

Somit könnte man die Ausschneidebedingung definieren als

$$Ausschneiden \; wenn \;\; FW + RW + LW + CW \; ,$$

oder aber

$$Ausschneiden \; wenn \;\; FW + \overline{RW} + \overline{LW} + CW \; .$$

Letzteres bedeutet, dass ein Objekt vom Laser dann ausgeschnitten wird, wenn die Fläche des gemessenen Objekts innerhalb des Wertebereichs liegt, die Rundheit und die Länge jeweils außerhalb der entsprechenden Wertebereiche liegen und zugleich die Farbe des Objekts innerhalb des Wertebereiches liegt.

Da auf diese Weise sehr viele individuelle, gemessene Merkmale mit ihren zugehörigen Wertebereichen verglichen werden können und viele Merkmale kombiniert werden können, ist nahezu jedes Objekt im Bild eindeutig durch einen bestimmten Satz von Merkmalen identifizierbar.

Es können zudem verschiedene Objekttypen erkannt werden und in verschiedenen Auffangbehältern individuell gesammelt werden. Z.B. können zwei Objekttypen individuell unterschieden werden mittels

*Objekt* 1 : *Ausschneiden wenn FW*1 + *RW*1 und

*Objekt* 2: *Ausschneiden wenn FW*2 + *RW*2

falls W1 nicht gleich W2. Da das System verschiedene Auffangbehälter für das Schnittgut besitzt, können verschiedene Objekte auch individuell gesammelt werden.

**8. Automatische Schnittlinienbestimmung für den Laser:**

Wenn die für das Ausschneiden vorgesehenen Objekte identifiziert wurden, wird im letzten Schritt gemäß **Fig. 1.2** das Ausschneiden vorbereitet. Zunächst wird bildanalytisch die Objektkontur jedes identifizierten Objektes bestimmt. Diese Objektkontur wird in xy-Koordinaten auf dem Präparat angegeben, an denen mit dem Laser geschnitten werden soll. Auf diese Weise wird vom System automatisch eine Schnittlinie bestimmt.

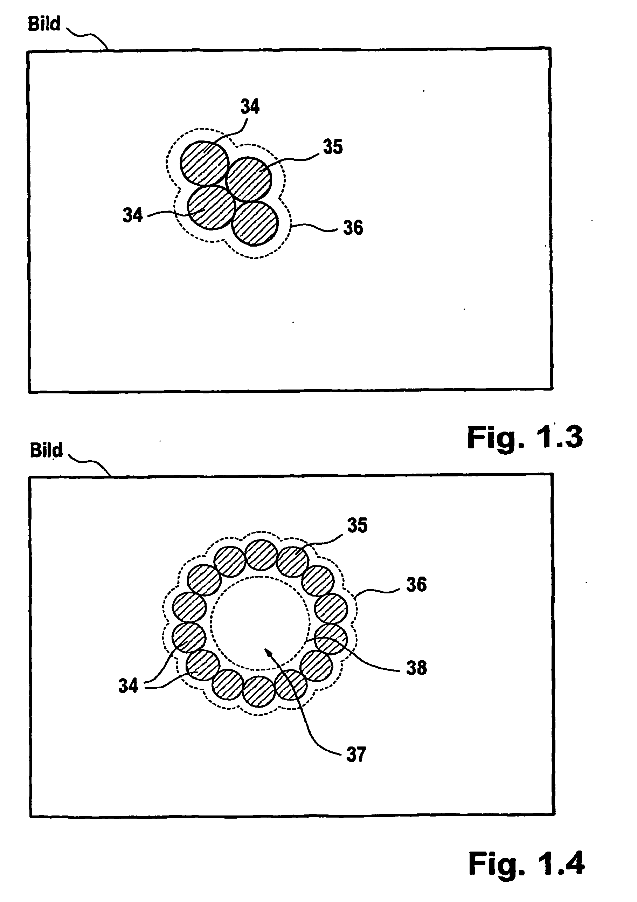

Vor der automatischen Schnittlinienbestimmung können die identifizierten Objekte jedoch noch selektiv weiteren Prozess-Schritten unterworfen werden, wie nachfolgend beschrieben. Beispielsweise werden eng beieinanderliegende Gruppen von Objekten im Bild geclustert, d.h. zu einer gemeinsam auszuschneidenden Objektgruppe zusammengefasst, wie in **Fig. 1.3** dargestellt. Hier bilden vier dicht zusammenliegende Objekte 34 ein Cluster 35. Für diesen Cluster wird dann eine gemeinsame außen umschließende Außenschnittlinie 36 bestimmt. Dadurch wird erfindungsgemäß verhindert, dass der Laser während des Schneidens benachbarte Präparatobjekte "durchschneidet", da diese Objekte zu dicht an dem Objekt liegen, welches zurzeit gerade ausgeschnitten wird (vergleiche **Fig. 1.3**). Auch hier kann man die Morphologie einsetzen: Im vorliegenden Ausführungsbeispiel wird eine Clusterung durch Schließen erreicht, wobei unter n-maligem Schließen in der Bildanalyse die sequentielle Ausführung von n Dilatationen, gefolgt von n Erosionen, gemeint ist. Dieses Prinzip ist bekannt von Schnaider, siehe http:/www.zgdv.de/zgdv/departments/z2/Z2Staff/schnaide/local_images/ME200 3-02.pdf.

Wie in **Fig. 1.4** dargestellt, können außerdem auch können innere "Löcher" in Clustern von für das Schneiden vorgesehenen Objekten beim Schnitt extra behandelt werden. Hier ergibt sich ein Loch 37 dadurch, dass mehrere Objekte 34 zwar geclustert werden, jedoch im Inneren dieses entstandenen Clusters 35 ein gewisser Bereich, also das Loch 37, frei ist, also ohne Objekte, die es auszuschneiden gilt. Es wird eine innenliegende Innenschnittlinie 38 und eine äußere Außenschnittlinie 36 bestimmt. Die Reihenfolge der Schnitte ist dann so, dass zuerst das Loch entlang der Innenschnittlinie 36 ausgeschnitten wird und dann erst der eigentliche Cluster 35 entlang der Außenschnittlinie 36 ausgeschnitten wird. Damit wird erreicht, dass der "Reinheitsgrad" ausgeschnittener Bereiche nicht durch das Material der innerhalb liegenden "Löcher" verringert wird.

Durch Vergleich der Objektposition mit der Bildrandposition kann zudem festgestellt werden, ob ein klassifiziertes Objekt den Rand des Videobildes touchiert oder nicht. Auf diese Weise wird erfindungsgemäß verhindert, dass der Laser unvollständige Objekte, die durch den Bildrand "abgeschnitten" werden, ebenso unvollständig ausschneidet. So kann das System folgende Option, z. B. mittels Software-Auswahl oder Wahlschalter, dem Benutzer anbieten:

*Wenn Objekt Bildrand berührt dann Objekt nicht ausschneiden*!

Diese Option ist vorzugsweise durch den Benutzer wahlweise aktivierbar und abschaltbar.

Darüber hinaus ist es mit dem erfindungsgemäßen Verfahren möglich, die segmentierten Objekte verschiedenen Objekttypen zuzuordnen. Dazu werden für die unterschiedlichen Typen von Objekten im Präparat unterschiedliche Gruppen von Klassifikationsmerkmalen vordefiniert. Bei Übereinstimmung der Objektmerkmale eines Objekts mit einer bestimmten Gruppe von Klassifikationsmerkmalen wird das Objekt klassifiziert und auf diese Weise dem durch die Klassifikationsmerkmale definierten Objekttyp zugeordnet. In einer besonderen Ausgestaltung weist das System einen visuellen Lernmodus auf, in dem ein Benutzer ohne umfangreiche Kenntnisse von bildanalytischen Methoden neue oder andere Kriterien zum Ausschneiden definieren kann. Dazu wählt der Benutzer lediglich mit der Computermaus am Bildschirm die von ihm gewünschten Objekte bzw. Objekttypen aus und das System bestimmt zu den ausgewählten Objekten bzw. Objekttypen automatisch die Klassifikationsmerkmale.

**Schnittlinienbestimmung:**

In einer möglichen Ausführungsform des Verfahrens wird der Laser mittels einer Ablenkeinheit für die Richtungen x, y über das Präparat geführt und schneidet auf diese Weise Bereiche aus dem Präparat aus. In einer anderen Ausführungsform wird der Laserstrahl ortsfest gehalten und der x-y-Tisch verfahren. Eine Kombination von Tischbewegung und Laserstrahlführung ist auch möglich. Um eine bestimmte Schnittfigur zu bekommen, wird der Laser relativ zu dem Präparat längs einer Kurve geführt. Die Kurve ist durch eine Schar von x, y Koordinaten gekennzeichnet.

Da das Präparat oder ein Ausschnitt des Präparates per Kamera auf dem Monitor zu sehen ist und da eine Abbildungsvorschrift existiert, welche die Pixelkoordinaten des Bildes auf entsprechende Koordinaten der Laserbewegung abbildet, können in das Monitorbild eingezeichnete Kurven in einen Laserschnitt umgesetzt werden. Dazu werden die Koordinaten der Kurve im Monitorbild durch eine affine Abbildung auf die Laserbewegung übertragen.

Das heißt es gibt eine lineare Abbildung

$$f_u : V \to V$$

für einen Vektor

$$u \in V$$

mit

$$u : V \to V$$

Somit wird sich jeder Punkt auf dem Bild mittels der linearen Abbildung auf einen Punkt auf dem Präparat abgebildet, der durch den Laser bzw. durch die Laserablenkeinheit erreicht werden kann. Es gilt

$$\begin{pmatrix} x' \\ y' \end{pmatrix} = \begin{pmatrix} a_{11} & a_{12} \\ a_{21} & a_{22} \end{pmatrix} \cdot \begin{pmatrix} x \\ y \end{pmatrix} + \begin{pmatrix} x_T \\ y_T \end{pmatrix}$$

Wobei (x', y') die Laserposition und (x, y) die Bildkoordinatenposition und ($x_T$, $y_T$) ein linearer Verschiebungsvektor ist.

Diese Tatsache wird nun erfindungsgemäß dazu verwendet, um ein automatisches Ausschneiden der zuvor identifizierten und klassifizierten Präparatobjekte zu erreichen.

Dazu wird im ersten Schritt die Objektkontur um jedes einzelne identifizierte und klassifizierte Präparatobjekt ermittelt. Um die Objektkontur zu berechnen, kann man sich des sog. Freeman-Codes oder Kettencodes bedienen.

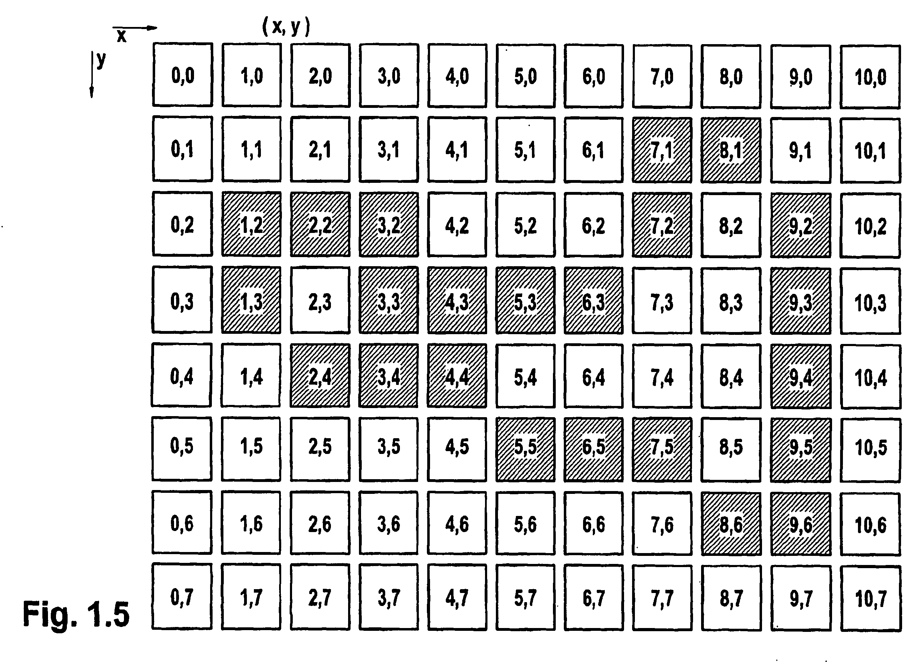

Zur Erläuterung der Vorgehensweise zur Ermittlung einer Konturlinie ist in **Fig. 1.5** exemplarisch ein einziges Binärobjekt eingezeichnet. Die Pixel des Bildausschnittes in **Fig. 1.5** sind gemäß ihrer x, y Koordinaten gekennzeichnet. Die Größe des Testbildes in **Fig. 1.5** ist 11 x 8 Pixel. Das Binärobjekt ist durch grau eingefärbte Quadrate, welche die Bildpixel darstellen, gekennzeichnet. Die Außenkontur der grauen Quadrate (= Pixel)) kennzeichnet den äußeren Objektrand. Diesen Rand gilt es zu bestimmen, denn er ist Grundlage für die spätere Bestimmung der Laserschnittlinie. Würde der Laser, entsprechend abgebildet, entlang der Koordinatenfolge {{7,1}, {8,1},{9,2}, ... {6,3},{7,2}} der grauen Pixel geführt werden, so würde das Objekt ausgeschnitten.

Als Startpunkt für das Ausschneiden wurde der oberste, linkste Binärobjektpunkt gewählt, Punkt {7,1}. Dieser Aufpunkt wird im Folgenden allgemein Feature Count Point (FCP) genannt. Ein FCP ist immer der Startpunkt und hat wie jedes Pixel eine x-y-Koordinate. Im Folgenden wird für jedes Binärbildobjekt der zu jedem Objekt zugehörige oberste, linkste Konturpixel als Feature Count Point FCP definiert. Es kann natürlich jedes Konturpixel als FCP definiert werden, wichtig ist hier nur eine einheitliche Festlegung.

Um die Laserschnittlinie aus einem Bild automatisch zu bestimmen, muss zunächst ein Binärbild vorliegen, in welchem die Bildobjekte von Interesse als binäres Muster vorliegen. Wenn ein solches Binärbild vorliegt, so haben alle Bildobjekte den gleichen Grauwert.

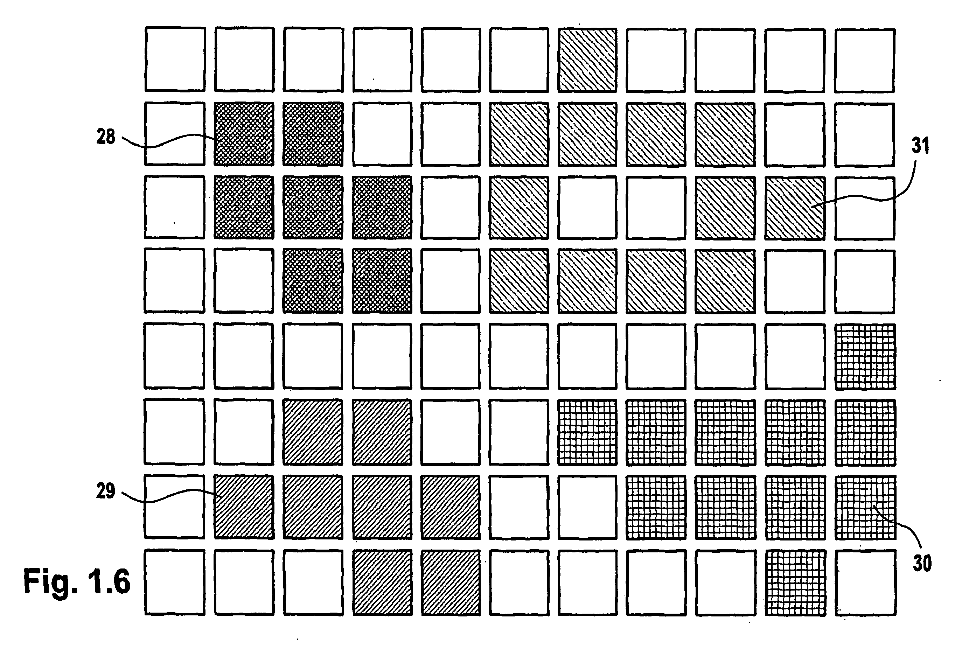

Um die Konturlinie für den Laserschnitt zu bestimmen, werden die Binärobjekte in dem Binärbild zunächst gelabelt, d.h. jedes Objekt bekommt einen individuellen, konstanten Grauwert zugewiesen, der allen seinen Pixeln zugeordnet wird, z.B. Grauwert 3 für alle Pixel eines Objekts usw.. Gewissermaßen wird hier aus dem Binärbild wieder ein Grauwertbild erzeugt, in dem alle Pixel, die zu einem zusammenhängenden Objekt gehören, einen einheitlichen, eindeutigen Grauwert bekommen. In **Fig. 1.6** sind vier Objekte 28, 29, 30 und 31 dargestellt, die jeweils durch eine zusammenhängende Pixelmenge dargestellt werden. Durch das Label bekam jedes Objekt, welches zuvor in dem Binärbild einen einheitlichen Grauwert hatte, nun einen individuellen Grauwert.

In **Fig. 1.6** bekam z.B. das Objekt 29 den Grauwert 2. Dieses Objekt wurde also mit dem Grauwert 2 gelabelt.

Im nächsten Schritt werden für alle Objekte die Außenpixel, also jene Pixel, welche am Außenrand des Objektes liegen, bestimmt. Dazu werden zunächst alle Löcher in einem Objekt geschlossen. Dabei werden als Loch diejenigen Pixel bezeichnet, die vollständig von Pixeln mit anderen Grauwerten umschlossen sind. Ein solches Beispiel ist in **Fig. 1.6** mit dem Objekt 31 gezeigt. Dieses Objekt 31 weist ein solches innenliegendes Loch auf, das in diesem Beispiel aus zwei zusammenhängenden Pixeln besteht. Ob ein Objekt Löcher hat, lässt sich über die Eulerzahl feststellen:

$$E = K - L$$

mit

E = Eulerzahl; K = Anzahl der Objekte; L = Anzahl der Löcher

Die Euterzahl ist ein topologisches Merkmal und ändert sich deshalb bei einfachen Transformationen nicht. Werden zunächst vor der Transformation alle Löcher innerhalb der einzelnen Objekte des Bildes geschlossen, d.h. L = 0 und E = K, treten auch bei der Abbildung des Bildes auf die Laserschnittlinie keine Lochkonturen mehr auf.

Danach kann die Außenkontur jedes Bildobjektes, welches keine Löcher mehr hat, leicht bestimmt werden. Hierzu ist festzustellen, dass jedes Pixel, welches ganz innerhalb eines Objektes liegt, vollständig von Objektpixeln des gleichen Grauwertes umgeben ist. Jedes Pixel, welches nicht vollständig von Objektpixeln gehört, muss daher zum Außenrand des Objektes gehören, wenn das Objekt keine Löcher hat. Dieses Kriterium wird für jedes Pixel überprüft und auf diese Weise die Randpixel bestimmt.

Die Randpixel zu einem Objekt werden gemäß der Freeman-Vorschrift kodiert und in die dem Objekt zugeordnete Werteliste abgespeichert. Dabei wird zur Richtungskodierung eine 8er-Umgebung verwendet, d.h. jedes Pixel ist von 8 anderen Pixeln umgeben. Prinzipiell kann man auch eine 4er-Umgebung verwenden, bei der entweder die 4 diagonalen oder die 4 nicht diagonalen Pixel berücksichtigt werden. Eine 8er-Umgebung ergibt eine höhere Genauigkeit, während eine 4er Umgebung schneller berechnet werden kann.

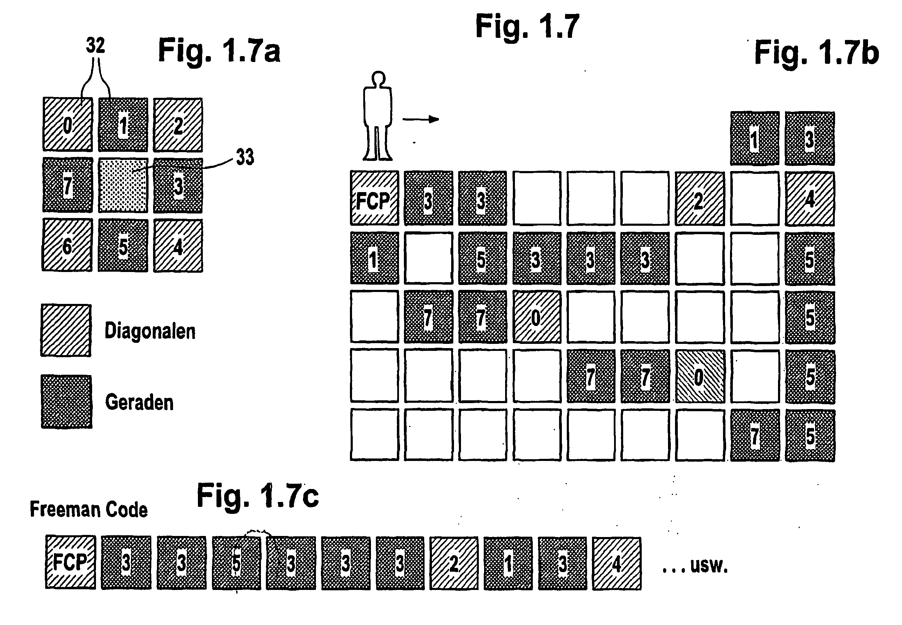

In **Fig. 1.7a)** ist eine solche 8er-Umgebung für einen Freeman-Code gezeigt. Der Zentralpixel ist jeweils von 8 Nachbarpixeln umgeben. Die Freeman-Notation gibt nun jedem Nachbarpixel, das eine bestimmte Schrittrichtung repräsentiert, eine eindeutige Zahl. Danach durchläuft man die Objektkontur von einem FCP aus anfangend.

In **Fig. 1.7.b)** sind die Randpixel eines Objektes dargestellt. In diesem Beispiel ist der FCP das äußerst linke, oberste Pixel. Dieser Punkt ist der Startpunkt. Von diesem Punkt aus bestimmt man die nächste Pixelposition z.B. im Uhrzeigersinn. Entsprechend dem Freeman-Code, wie in **Fig. 1.7a)** dargestellt, findet man den nächsten Pixel auf Position 3. Von diesem Pixel aus betrachtet den nächsten Pixel an Position 3, von diesem aus betrachtet den nächsten Pixel auf Position 5 usw..

Indem jede Objektkontur vollständig, von dem jeweiligen FCP ausgehend, abgeschritten wird, bekommt man einen Freeman-Code in Form einer Zahlenkette, welche die Kontur des jeweiligen Objekts vollständig beschreibt. Indem zusätzlich für jedes Objekt die Koordinaten des FCP gespeichert werden, sind alle Objekte im Bild vollständig in Kontur und Position beschreibbar. **Fig. 1.7c)** zeigt die entsprechende Schreibweise des Freeman-Codes für die Randpixel des in **Fig. 1.7b)** dargestellten Objektes. Durch dieses Kodierungsverfahren wird als Zwischenergebnis eine Liste mit Konturdaten zu allen Objekten erzeugt, welche die jeweilige Position des FCP umfasst, von dem aus eine Objektkontur beschrieben werden muss.

Tab 1.5: (Beispiel) Bestimmung des Laserschnittcodes durch Verwendung eines Konturanalyseverfahrens

|  | FCP X | FCP Y | Freeman-Code beschreibt Außenlaserschnittlinie von Objekt |
|---|---|---|---|
| Objekt 1 | $X_1$ | $y_1$ | 2333563345673000... |
| Objekt 2 | $X_2$ | $y_2$ | 422334 67776002345 ... |
| Objekt 3 | $X_3$ | $y_3$ | 6673332221176600333 ... |
| Objekt 4 | $X_4$ | $y_4$ | 336522100655... |
| ... |  |  |  |
| Objekt n | $x_n$ | $y_n$ | 223566676553211000 ... |

Aus dem Freeman-Code und den FCP-Koordinaten wird die exakte x-y-Position eines jeden Pixels berechnet. Damit ist die Laserschnittlinie zunächst vollständig beschrieben. Grundsätzlich sind jedoch auch andere Kodierungverfahren möglich.

Wird eine Freeman-Codierung wie in **Fig. 1.7.** verwendet, so ergibt sich folgende Umrechnungstabelle für die jeweils nächste Pixelposition in x, y:

Tab 1.6: (Beispiel) Umrechnung des Freeman-Codes in konkrete Pixelkoordinaten

| Freeman-Code | Letzte Pixelposition | dx | dy |
|---|---|---|---|
| 0 | $x_{Last}, y_{Last}$ | -1 | -1 |
| 1 | $x_{Last}, y_{Last}$ | 0 | -1 |
| 2 | $x_{Last}, y_{Last}$ | +1 | -1 |
| 3 | $x_{Last}, y_{Last}$ | +1 | 0 |
| 4 | $x_{Last}, y_{Last}$ | +1 | +1 |
| 5 | $x_{Last}, y_{Last}$ | 0 | +1 |
| 6 | $x_{Last}, y_{Last}$ | -1 | +1 |
| 7 | $x_{Last}, y_{Last}$ | -1 | 0 |

Dabei werden zu Beginn die Startwerte des FCP eingesetzt:

$x_{Last} = x_{FCP}$
$y_{Last} = y_{FCP}$

Anschließend wird dem Freeman-Code an der Kontur entlang gefolgt. Am Ende dieser Prozedur liegt der Laserschnittcode für jedes identifizierte und klassifizierte Bildobjekt einzeln vor, welcher mittels der Transformation

$$\begin{pmatrix} x' \\ y' \end{pmatrix} = \begin{pmatrix} a_{11} & a_{12} \\ a_{21} & a_{22} \end{pmatrix} \cdot \begin{pmatrix} x \\ y \end{pmatrix} + \begin{pmatrix} x_T \\ y_T \end{pmatrix}$$

von den Bildkoordinaten auf die entsprechenden Laserkoordinaten übertragen wird. Der Translationsvektor $\{x_T, y_T\}$ kann die Laserschnittlinie verschieben.

Durch die Art der Abbildung wird außerdem die gefundene Laserschnittlinie, die das Objekt umgibt, skaliert. Dies wird genutzt, um Objekte mit geringerer Auflösung (niedriger vergrößerndes Objektiv) bildanalytisch auszuwerten und dann, nach einer manuellen oder automatischen Umschaltung des Mikroskops auf eine höhere Auflösung (= höher vergrößerndes Objektiv), die klassifizierten Objekte per Laserstrahl auszuschneiden. Da die Laserschnittlinie als Vektorbeschreibung vorliegt, gelingt eine nahezu verlustlose Skalierung der Laserschnittlinien, die bei niedriger Vergrößerung gefunden wurden, auf das Bild mit höherer Auflösung.

Da mit einer Umschaltung auf eine höhere Vergrößerung eine Verkleinerung des Bildfeldes einhergeht, liegen manche der Schnittlinien außerhalb des aktuellen Bildfeldes und sind daher zunächst nicht mehr mit dem Laserstrahl erreichbar. Da jedoch die Laserschnittlinienpositionen außerhalb des aktuellen Sehfeldes bekannt sind, können sie durch eine automatische Verstellung der Mikroskoptischposition repositioniert werden. Dies wird erreicht durch den Einsatz geeigneter Mittel, wie beispielsweise eines automatischen Tisches, eines automatischen Objektivwechsels etc.

Bei sehr hohen Vergrößerungen und kleinen Objekten wird bei Bedarf die Tischpositionierungsgenauigkeit durch den zusätzlichen Einsatz von Piezo-Translatoren für die x- und y-Richtung des Tisches verbessert. Dabei kann gleichwirkend auch die Verstellung der Präparat-Halterung mittels Piezo-Translatoren erfolgen. Da der Laserstrahl über eine Ablenkeinheit in der Auflichtachse abgelenkt wird und dabei schneidet und außerdem zuvor die auszuschneidenden Objekte automatisch in Ihrer Position ermittelt wurden, gelingt durch Kombination von Tischbewegung zum Anfahren der optimalen Schneidposition (in der Nähe der optischen Achse) und Laserschnitt entlang der automatisch gefundenen Laserschnittlinie per Ablenkeinheit ein hochpräzises und schnelles Ausschneiden der automatisch gefundenen Objekte.

Durch eine günstige Kombination von gleichzeitiger Bewegung des Laserstrahls mittels der Ablenkeinheit in der Auflichtachse, der "normalen" Mikroskoptischbewegung und der gegebenenfalls vorhandenen feineren Auflösung durch den zusätzlichen Einsatz von Piezo-Translatoren können die automatisch gefundenen Laserschnittlinien zudem schneller angefahren werden. Dabei wird der eigentliche Schneideprozess durch die Ablenkeinheit in der Auflichtachse vorgenommen, während die Grob- und Feinpositionierung der Objekte durch geeignete automatische Bewegungen der beteiligten Aktoren (= Piezo-Translatoren) für die x-y-Positionierung vorgenommen werden.

Dabei wird das Problem der notwendigen Refokussierung nach Umschalten in einen anderen Auflösungsmodus, d.h. auf ein anderes Objektiv, durch den Einsatz eines Autofokus gelöst. Die erforderliche Geschwindigkeit wird durch den Einsatz eines Piezofokus am Objektiv erzielt, d.h. das Objektiv wird per Piezo-Translator vertikal bewegt.

Weitere Ausführungsmöglichkeiten einer Fokussierung bestehen in dem manuellen Schadstellen oder aber durch Verwendung von Schrittmotoren zur elektronisch gesteuerten Fokussierung über die vertikale Z-Achse des Mikroskops. Der Vorteil der schnellen automatischen Fokussierung liegt erfindungsgemäß darin, das ein optimaler Laserschnitt durchgeführt werden kann, wenn der Laser stets in der gewünschten Schnittebene, d.h. Präperat-Ebene, fokussiert wird.

Bei vollautomatischen Prozessen wie der automatischen LaserschnittlinienBestimmung mit dem anschließenden Ausschneiden einer großen Anzahl von Objekten ist eine automatische und schnelle Fokussierung unerläßlich.

**Berücksichtigung der Schnittbreite des Lasers:**

Da der Schnitt eines Laserstrahls eine gewisse, nicht zu vernachlässigende Breite hat, führt ein Schneiden direkt an der Außenkante eines Objektes dazu, dass Teile des Objektrandes mit verbrennen. Dies führt zu unerwünschten Artefakten in der nachfolgenden Analyse. Diese biologischen Artefakte entstehen dadurch, dass die Verbrennung der Randstruktur zu einer Veränderung der molekularen Struktur in den Randbereichen der Objekte führt. Da in den meisten Fällen aber die Objekte ausgeschnitten und gesammelt werden, um deren Eigenschaften in sich anschließenden biochemischen Analyse-Schritten (beispielsweise mittels PCR) zu bestimmen, sind Verbrennungen in den Randbereichen eines Objektes zu vermeiden. Dies wird dadurch erreicht, dass der ausschneidende Laserstrahl in einem gewissen, einstellbaren Abstand so um das Objekt herum geführt wird, dass keine Verbrennungsartefakte auftreten können.

**Ausführungsbeispiel 1:**

Ein Ausführungsbeispiel ist die Anwendung mathematischer Morphologie auf das Binärbild, welches als Zwischenverarbeitungsschritt auf dem Wege der Bestimmung der Laserschnittlinie entsteht. Da das Binärbild vor der Bestimmung des Laserschnittlinienprofils entsteht, also vor der Berechnung der Schnittlinie mittels Freeman-Code und Umsetzung auf x-y-Koordinaten (wie weiter oben beschrieben), wirkt sich eine Manipulation des Binärbildes auf die Konturbestimmung aus.

Indem man das Binärbild dilatiert (Dilatation = morphologischer Bildverarbeitungsschritt) werden die Binärobjekte vergrößert. Um eine möglichst symmetrische Vergrößerung zu erreichen, wird als strukturierendes Element SE ein symmetrisches Element genommen, welches maßstabsgetreu und richtungsunabhängig dilatiert. Das kann beispielsweise ein sogenanntes Diskelement (siehe z.B. Sierra) sein. Um das Objekt zu verzerren, kann auch ein anderes SE genommen werden, welches die benötigten morphologischen Anforderungen erfüllt. Darüber hinaus kann die Dilatation zyklisch mehrmals auf die Bildobjekte angewendet werden, wobei sich sich jedesmal jedes Bildobjekt im Binärbild um einen bestimmten Pixelbetrag vergrößert.

Durch Wahl eines geeigneten SE wird erreicht, dass sich bei jedem Anwendungszyklus das Objekt nur um etwa ein Pixel in jede Richtung ausdehnt. Das bedeutet, der Objektdurchmesser vergrößert sich um ca. 2 Pixel bei jeder Anwendung (Zyklus) eines einigen Dilatationsschrittes mit dieser SE.

Ferner kann man durch Kalibrierung der Bildpixel die Größe eines Pixels in $\mu$m ermitteln. Bei den gewöhnlich verwendeten quadratischen Pixeln ist daher

$$dx_{Pixel} = dy_{Pixel} = \text{Größe eines Pixels nach der Kalibrierung.}$$

Da der Laserstrahl eine bekannte Schnittbreite besitzt, kann nun die benötigte Objektvergrößerung, d.h. die Anzahl der Dilatationsschritte, die benötigt werden, um den Laserstrahl in einem sicheren Abstand um das Objekt zu führen, bestimmt werden.

Beispiel:

Laserstrahl - Schnittquerschnitt $L_s$ = 8 $\mu$m
Pixelgröße (kalibriert) $P_k$ = 1 $\mu$m
Objektvergrößerung pro Dilatation $D_{z=1}$ = 2 Pixel (z= Zyklenanzahl)

Benötigter Abstand des Lasers vom Objekt

$$L_{Abstand} = L_s / 2 = 4 \ \mu m$$

Benötigte Zyklenanzahl für die Dilatationen $Z_D$ um gewünschten Laserabstand zu erreichen

$$Z_D = L_{Abstand} / P_k = 4 \ \text{Dilatationszyklen}$$

D.h. nach 4 Dilatationszyklen wird eine virtuelle Objektgröße erreicht, deren Außenkontur den Laser in dem korrekten Abstand vom eigentlichen Objekt (vor der künstlichen Aufblähung) um das Objekt führen würde. Indem die Laserschnittlinien auf Basis der durch Dilatation entsprechend vergrößerten, virtuellen Objekte berechnet werden (wie oben beschrieben), bekommt beim Schnitt der Laserstrahl die gewünschte Entfernung vom Objektrand und schneidet das Objekt sicher und ohne Verbrennung der Objektrandbereiche aus.

**Ausführungsbeispiel 2:**

In einem weiteren Ausführungsbeispiel wird die Vektorisierung der Schnittlinie zugrundegelegt, die zuvor nach dem oben benannten Verfahren zur automatischen Laserschnittlinienbestimmung errechnet wurde.

Nun wird jeder Punkt der Laserschnittlinie einer Skalierungstransformation unterzogen. Dies erfolgt derart, dass die gewünschte Vergrößerung der Laserschnittlinie erreicht wird und der Laserstrahl in sicherem Abstand um das Objekt herum geführt werden kann, um sicherzustellen, dass es unbeschädigt ausgeschnitten wird.

Im folgenden wird angenommen, dass die Laserschnittlinie bereits durch vorherige Bestimmung (automatisch oder manuell) bekannt ist. Die Laserschnittlinie besteht aus einer Schar von Punkten Pi mit Koordinaten $(x_i, y_i)$ welche

die Laserschnittlinie vollständig beschreiben. Bei Skalierung gilt für jeden Punkt P

$$x_i' = sx \cdot x_i$$

$$y_i' = sy \cdot y_i$$

wobei sx und sy Skalierungsfaktoren sind. In Vektomotation wird dies beschrieben als

$$P_i = \begin{pmatrix} x_i \\ y_i \end{pmatrix} \qquad S = \begin{pmatrix} sx & 0 \\ 0 & sy \end{pmatrix} \qquad P_i' = \begin{pmatrix} x_i' \\ y_i' \end{pmatrix} \quad ,$$

wobei $P_i$ der i-te Originalpunkt und $P_i'$ der i-te skalierte Punkt der Laserschnittlinie ist. Somit lautet die Skalierungsgleichung

$$P_i' = S \cdot P_i$$

für alle Punkte i aus dem Intervall [0, k] der Laserschnittlinie. Durch diese Vorgehensweise wird die Laserschnittlinie so skaliert, dass das Objekt in sicherem Abstand geschnitten werden kann. Die durch diese Art der Skalierung bedingten Abstände der einzelnen Konturpunkte werden dadurch ausgeglichen, das der Laserstrahl in Geraden von Punkt $P_i$ zu Punkt $P_{i+1}$ schneidet. Bei starken Vergrößerungen wird also die kontinuierlich verlaufende Laserschnittlinie durch ein Polygon angenähert, indem die einzelnen Punkte $P_i$ durch gerade Abschnitte der Laserschnittlinie verbunden werden.

Ferner können Abbildungsverzerrungen (Abberationen) durch eine geeignete ortsabhängige Adaption der Skalierungsmatrix kompensiert werden, also:

$$P_i' = S_i \cdot P_i$$

## Transformation der Laserschnittlinien

Um die Schnittlinien an unterschiedliche Gegebenheiten anzupassen, wird ausgenutzt, dass die automatisch errechnete Laserschnittlinie als eine Schar von Punkten $P_i = P(x_i, y_i)$ vorliegt. Indem man diese Punkte in eine neue Punkteschar transformiert, erreicht man beliebige Verzerrungen, Verschiebungen und Rotationen der Laserschnittlinie zum Zwecke der Kompensation von Fehlern beim Laserschnitt. Damit könnten beispielsweise Abbildungsfehler der den Laserstrahl abbildenden Optik kompensiert werden. Im folgenden werden beispielhaft verschiedene Kompensationsverfahren beschrieben.

## Fehlerkompensation oder Manipulation durch Translation

Die Schnittlinie wird um dx und dy verschoben. Die Werte für dx, dy ergeben sich aus den jeweils ermittelten Fehlern, bzw. aus den gewünschten Laserschnittlinienmanipulationen

$$x_i' = x_i + dx$$

$$y_i' = y_i + dy$$

$$P_i = \begin{pmatrix} x_i \\ y_i \end{pmatrix} \qquad T = \begin{pmatrix} dx \\ dy \end{pmatrix} \qquad P_i' = \begin{pmatrix} x_i' \\ y_i' \end{pmatrix}$$

oder kurz

$$P_i' = P_i + T$$

Verzerrungen können durch adaptive Translation, eben durch eine Ortsabhängigkeit des Translationswertes, kompensiert werden

$$P_i' = P_i + T_i$$

Durch diese Maßnahme können z.B. kleine Abweichungen in der Genauigkeit der Mikroskoptisch - Repositionierung gezielt kompensiert werden.

**Fehlerkompensation oder Manipulation durch Skalierung**

Die Schnittlinie wird um sx und sy skaliert. Die Werte für sx, sy ergeben sich aus den jeweils ermittelten Fehlern, bzw. aus den gewünschten Laserschnittlinienmanipulationen

$$x_i' = sx \cdot x_i$$

$$y_i' = sy \cdot y_i$$

$$P_i = \begin{pmatrix} x_i \\ y_i \end{pmatrix} \qquad S = \begin{pmatrix} sx & 0 \\ 0 & sy \end{pmatrix} \qquad P_i' = \begin{pmatrix} x_i' \\ y_i' \end{pmatrix}$$

oder kurz

$$P_i' = S \cdot P_i$$

Verzerrungen können durch adaptive Skalierung, eben durch eine Ortsabhängigkeit des Skalierungswertes, kompensiert werden:

$$P_i' = S_i \cdot P_i$$

Durch diese Maßnahme werden z.B. Verzerrungen durch Linsenfehler kompensiert. Es ergeben sich die folgenden Möglichkeiten der Laserschnittlinienbeeinflussung

Tab 1.7: Möglichkeiten zur Skalierung der Laserschnittlinie in x Richtung (y entsprechend)

| $P_i$ ($X_i$) | Skalierungswert sx | $P_i'(x_i')$ |
|---|---|---|
| falls $x_i > 0$ | sx=0 | $x_i'$ liegt auf der y Achse |
| | sx =1 1 | identische Abbildung |
| | sx = -1 | gespiegelt an y Achse |
| | sx> 1 | Dehnung |
| | sx<-1 | Dehnung und gespiegelt |
| | sx< 1 UND |sx|>0 | Stauchung |
| | sx< 1 UND |sx|<0 | Stauchung und gespiegelt |

(fortgesetzt)

| $P_i(X_i)$ | Skalierungswert sx | $P_i'(x_i')$ |
|---|---|---|
| falls $x_i < 0$ | sx = 0 | $x_i'$ liegt auf der y Achse |
| | sx=1 | identische Abbildung |
| | sx = -1 | gespiegelt an y Achse |
| | sx> 1 | Dehnung |
| | sx<-1 | Dehnung und gespiegelt |
| | sx< 1 UND \|sx\|>0 | Stauchung |
| | sx< 1 UND \|sx\|<0 | Stauchung und gespiegelt |

**Fehlerkompensation oder Manipulation durch Rotation**

Die Schnittlinie wird um einen Winkel $\Theta$ gedreht. Der Wert für $\Theta$ ergibt sich aus den jeweils gewünschten Laserschnittlinienmanipulationen

$$x_i' = x_i \cdot \cos(\Theta) - y_i \cdot \sin(\Theta)$$

$$y_i' = x_i \cdot \sin(\Theta) + y_i \cdot \cos(\Theta)$$

$$P_i = \begin{pmatrix} x_i \\ y_i \end{pmatrix} \qquad R = \begin{pmatrix} \cos(\Theta) & -\sin(\Theta) \\ \sin(\Theta) & \cos(\Theta) \end{pmatrix} \qquad P_i' = \begin{pmatrix} x_i' \\ y_i' \end{pmatrix}$$

oder kurz

$$P_i' = R \cdot P_i$$

Verzerrungen können durch adaptive Drehung einzelner Laserschnittlinienpunke, eben durch eine Ortsabhängigkeit des Drehwinkels, kompensiert werden

$$P_i' = R_i \cdot P_i$$

Durch diese Maßnahme werden z.B. Rotationsfehler kompensiert.

**Manipulation der Laserschnittlinie durch die Komposition von Transformationen**

Die oben genannten Manipulationen zur Anpassung der berechneten Laserschnittlinie an die Gegebenheiten oder aber zum Zwecke der Fehlerkorrektur oder aber aus sonstigen Anpassungsgründen können auch durch die Komposition verschiedener Transformationen erreicht werden. Der Vorteil liegt in der erhöhten Geschwindigkeit, mit der komplexe Laserschnittlinien berechnet und manipuliert werden können.

In einer vorteilhaften Ausgestaltung einer für die Ausübung des Verfahrens geeigneten Laser-Mikrodissektions-Vorrichtung weist diese eine geeignete Benutzerschnittstelle auf, die dem Benutzer eine leichte und für ihn transparente Manipulation komplexer Abbildungen von Laserschnittmustern ermöglicht.

Dazu müssen die Transformationen in die 3x3 Matrixschreibweise überführt werden. Es gilt nunmehr für die Transformationen

Translation:

$$P_i = \begin{pmatrix} x_i \\ y_i \\ 1 \end{pmatrix} \qquad T = \begin{pmatrix} 1 & 0 & dx \\ 0 & 1 & dy \\ 0 & 0 & 1 \end{pmatrix} \qquad P_i' = \begin{pmatrix} x_i' \\ y_i' \\ 1 \end{pmatrix}$$

Skalierung:

$$P_i = \begin{pmatrix} x_i \\ y_i \\ 1 \end{pmatrix} \qquad S = \begin{pmatrix} sx & 0 & 0 \\ 0 & sy & 0 \\ 0 & 0 & 1 \end{pmatrix} \qquad P_i' = \begin{pmatrix} x_i' \\ y_i' \\ 1 \end{pmatrix}$$

Rotation:

$$P_i = \begin{pmatrix} x_i \\ y_i \\ 1 \end{pmatrix} \qquad R = \begin{pmatrix} \cos\Theta & -\sin\Theta & 0 \\ \sin\Theta & \cos\Theta & 0 \\ 0 & 0 & 1 \end{pmatrix} \qquad P_i' = \begin{pmatrix} x_i' \\ y_i' \\ 1 \end{pmatrix}$$

Kompositionsbeispiele:

$P_i' = T_1 \cdot T_2 \cdot P_i$      (zwei Translationen werden ausgeführt)
$P_i' = S_1 \cdot S_2 \cdot P_i$      (zwei Skalierungen werden ausgeführt)
$P_i' = R_1 \cdot R_2 \cdot P_i$      (zwei Rotationen werden ausgeführt)
$P_i' = S_1 \cdot T_1 \cdot R_1 \cdot P_i$      (Rotation, Translation, Skalierung wird ausgeführt)

Durch Kombination der Transformationen kann die zuvor automatisch gefundene oder bereits auf anderem Wege bekannte Laserschnittlinie, wenn sie nur bekannt ist als eine Schar von Punkten mit $P_i = P(x_i, y_i)$, in beliebiger Weise rotiert, skaliert und verschoben werden. Insbesondere lassen sich gleiche Schnittmuster wiederholen, um so ein Array von gleichartigen Schnittmustern auszuschneiden.

Es ist ferner möglich, die einzelnen Transformationen per Matrixmultiplikation zu kombinieren (wobei die Kombinationsreihenfolge im allgemeinen nicht kommutativ ist).

Die Darstellung der Laserschnittlinie als eine Punkteschar ermöglicht also die Nutzung aller bekannten Operationen aus der Linearen Algebra um die Laserschnittmuster auf einfachste Weise und in einer für dem Benutzer in höchstem Maße verständliche und transparente Weise darzustellen.

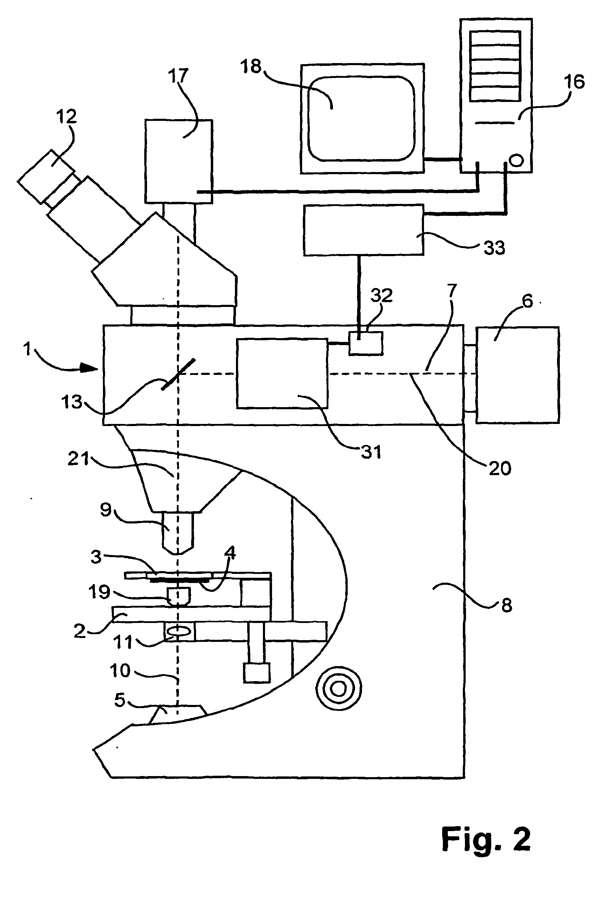

*Fig. 2* zeigt ein Laser-Mikro-Dissektionsgerät zur Durchführung des erfindungsgemäßen Verfahrens, welches in dieser beispielhaften Ausgestaltung beim Schneiden einen Laserstrahl über eine festgehaltene Probe bewegt. In einer anderen Ausführungsform (nicht dargestellt) wird der Laserstrahl ortsfest gehalten und das Präparat relativ dazu bewegt.

Das Laser-Mikro-Dissektionsgerät umfasst ein Mikroskop 1 mit einem verfahrbaren x-y-Tisch 2, auf dem ein Präparatehalter 3 angeordnet ist. In dieser Ausführungsform wird ein aufrechtes Mikroskop verwendet. Es ist jedoch auch möglich, dafür einen Aufbau mit einem inversen Mikroskop zu benutzen.

An der Unterseite des Präparatehalters 3 befindet sich ein Präparat 4, aus dem ein Objekt ausgeschnitten werden soll. Unter dem x-y-Tisch 2 sind ein Beleuchtungssystem 5 und ein Kondensor 11 angeordnet, der das Präparat 4 beleuchtet. Der x-y-Tisch 2 wird in dieser Ausführungsform während des Schneidvorgangs horizontal, also in x-Richtung und in y-Richtung, nicht verfahren. Unterhalb des Präparats 4 ist mindestens ein Auffangbehältnis 19 zum Auffangen des ausgeschnittenen Dissektats angeordnet.

Von einem Laser 6, in diesem Beispiel ein UV-Laser, geht ein Laserstrahl 7 aus, der in einen Beleuchtungsstrahlengang 20 eingekoppelt wird. In dem Beleuchtungsstrahlengang 20 ist eine Laser-Scan-Einrichtung 22 angeordnet. Der Laserstrahl 7 durchläuft die Laser-Scan-Einrichtung 22 und gelangt über ein optisches System 13 zu einem Objektiv 9, das den Laserstrahl 7 auf das Präparat 4 fokussiert. Das optische System 13 ist mit Vorteil als dichromatischer Teiler ausgeführt, durch den ein von dem Präparat 4 durch das Objektiv 9 ausgehender Abbildungsstrahlengang 21 zu mindestens einem Okular 12 gelangt.

Die Einstellung der Laser-Scan-Einrichtung 22 und damit die Verstellung des Laserstrahls 7 auf dem Präparat 4 erfolgt in dieser Ausführungsform mit einem der Laser-Scan-Einrichtung 22 zugeordneten Motor 23, einer Steuerungseinheit 24 und einem Rechner 16. Der Motor 23 ist mit der Steuerungseinheit 24 verbundenen, welche die Steuersignale zur Ansteuerung des Motors 23 liefert. Die Steuerungseinheit 24 ist mit dem Rechner 16 verbunden, an den ein Monitor 18 angeschlossen ist. Auf dem Monitor 18 wird ein von einer Kamera 17 aufgenommener Bildausschnitt des Präparats 4 dargestellt. Mittels einer Rechner-Maus (nicht dargestellt) oder einer anderen beliebigen Cursorsteuerungseinrichtung kann auf dem Monitor 18 in dem Kamerabild eine gewünschte Soll-Schnittlinie definiert werden. Der Rechner 16 ist außerdem mit der Laserlichtquelle 6 verbunden und liefert dieser nur dann Triggersignale zum Auslösen von Laserimpulsen, wenn ein Schnitt durchgeführt wird.

Die Laser-Scan-Einrichtung 22 selbst dient als Schnittlinien-Steuerungseinheit, die während des Schneidvorgangs eine Relativbewegung zwischen dem Laserstrahl 7 und dem Präparat 4 erzeugt. Die Fokussierung des Laserstrahls 7 kann durch manuelles Verfahren des x-y-Tisches 2 in der Höhe bei gleichzeitiger visueller Kontrolle des Kamerabildes durch einen Benutzer erfolgen. Bedienungsfreundlicher ist jedoch eine Ausführungsform der Vorrichtung, die eine Autofokus-Vorrichtung (nicht dargestellt) für den Laserstrahl 7 umfasst.

Durch Ansteuerung der Laser-Scan-Einrichtung 22 erscheint der Laserstrahl 7 am Ausgang der Laser-Scan-Einrichtung 22 unter verschiedenen Ablenkwinkeln. Dabei kann der Laserstrahl 7 durch Variation des Ablenkwinkels auf beliebige Positionen auf dem Präparat 4 geführt werden, die innerhalb des Sehfeldes des Objektivs 10 liegen.

Auf dem Rechner 16 ist eine Bildanalyse-Software installiert, mit welcher das von der Kamera 17 aufgenommene Bild bearbeitet und mindestens ein auszuschneidendes Objekt entsprechend dem erfindungsgemäßen Verfahren automatisch in dem Bild ermittelt wird. Danach wird zu dem Objekt automatisch eine Soll-Schnittlinie, die das Objekt umgibt, ermittelt.

Die Schnittbreite eines Lasers in einer Probe hängt ab von den Laserparametern, wie z.B. Laserleistung und Apertur des Laserstrahls 7. Entsprechend der aktuellen eingestellten Schnittbreite wird zu der verfahrensgemäß automatisch bestimmten Soll-Schnittlinie eine Anzahl von Sollpositionen des Laserstrahls auf der Probe 4 berechnet, wobei die aneinander gereihten Sollpositionen des Laserstrahls 7 die gewünschte Soll-Schnittlinie ergeben.

Dann werden auf der Probe 4 nacheinander die Sollpositionen mit der Laser-Scan-Einrichtung 22 angefahren. Jedes Mal, wenn die Sollposition des Laserstrahls 7 auf der Probe 4 mittels der Laser-Scan-Einrichtung 22 vorbereitet bzw. eingestellt wurde, liefert der Rechner 16 Triggersignale zum Auslösen von Laserpulsen an die Laserlichtquelle 6. Auf diese Weise wird schrittweise der Laserschnitt im Präparat erzeugt.

Nach Beendigung der Laserschnitts ist das Dissektat von dem umgebenden Präparat 4 vollständig getrennt und fällt in dieser Anordnung unter Einwirkung der Schwerkraft in das darunter angeordnete Auffangbehältnis 19.

**Spezielle Ausgestaltungen des Verfahrens**

Nachfolgend werden noch verschiedene spezielle Ausgestaltungen des Verfahrens angegeben.

Eine weitere Ausgestaltung des Verfahrens ist dadurch gekennzeichnet, dass zusätzlich eine automatische Shadingkorrektur vorgesehen ist mit folgenden Schritten:

- Manuelle oder automatische Positionierung des Mikroskoptisches an einer Position, die entweder als DEFAULT-Position vorprogrammiert oder alternativ zuvor eingelernt wurde, die es erlaubt, ein Leerbild, also ein Bild der inhomogenen Beleuchtung, aufzunehmen;
- Abspeichern dieses Shadingkorrekturbildes als reversibles Bilddatenformat (TIF = Tagged Image File (Bildformat), BMP = Bitmap (Bildformat) etc.);
- und Anwendung des gespeicherten Shadingbildes auf die nachfolgenden Bilder, in denen Objekte erkannt werden sollen und wobei diese Objekte per Laserstrahl ausgeschnitten werden sollen, zum Zwecke der Beseitigung der durch die inhomogene Beleuchtung hervorgerufenen Bildverfälschung.

Eine weitere Ausgestaltung des Verfahrens ist dadurch gekennzeichnet, dass zusätzlich eine automatische und manuelle Objektdetektion von auszuschneidenden Objekten vorgesehen ist. Dazu wird mittels eines geeigneten Verfahrens ein möglichst günstiger Schwellenwert in das Histogramm gelegt und damit ein optimales Binärbild erzeugt, welches ein Größtmass an Informationen über die per Laser auszuschneidenden Objekte enthält. Beispielsweise kann durch ein Entropiemaximierungsverfahren der optimale Schwellenwert für eine automatische Binärbilderzeugung bestimmt werden. Alternativ kann der Schwellwert für die Binärbilderzeugung auch manuell eingestellt werden.

Die Schwellenwerte können auf Datenträgern gespeichert und wieder aufgerufen werden, so dass eine wiederholte Objektbinärisierung für das Laserschnittverfahren vorgenommen werden kann.

Eine weitere Ausgestaltung des Verfahrens ist dadurch gekennzeichnet, dass zusätzlich eine Beseitigung von kleineren Objekten, die mit dem Laser nicht ausgeschnitten werden sollen, vorgesehen ist. Dazu können folgende Schritte vorgesehen sein:

- kleinere Objekte werden durch bildanalytische Morphologie, im speziellen durch Erosion, aus dem Binärbild entfernt;
- über die Anzahl der Erosionszyklen wird ein Maß für die Größe der Objekte eingestellt, die aus dem Laserschneidverfahren ausgeschlossen werden sollen;
- durch formgebende Faktoren, also durch Ausnutzung der Morphologie der verwendeten bildanalytischen Operatoren, werden bestimmte Objektformen von dem Laserschneidverfahren ausgeschlossen, indem man diese Objekte aus dem Binärbild filtert.

Eine weitere Ausgestaltung des Verfahrens zeichnet sich dadurch aus, dass zusätzlich ein Durchschneidens zu eng benachbarter Objekte im Präparat verhindert wird. Dazu werden zu eng benachbarte Bildobjekte, die per Laser ausgeschnitten werden sollen, zu einem Cluster zusammengefasst. Dies erfolgt derart, dass der Laserschnitt um alle Teilchen außen herum geführt wird und somit der gesamte, zusammenhängende Bereich aus Objekten von Interesse ausgeschnitten wird. Somit wird kein Objekt von Interesse "durchschnitten". Dabei wird mathematische Morphologie eingesetzt, um die Außenkonturlinie für den Laserschnitt zu bestimmen.

In einer weiteren Ausgestaltung des Verfahrens werden in den gewünschten Clustern eingeschlossene Objekte oder Bereiche, die sogenannten Löcher, von den Clustern separiert. Dazu sind folgende Schritte vorgesehen:

- es werden mehrere Schnittlinien, im speziellen zwei Schnittlinien, berechnet, derart, das n Schnittlinien das Loch oder die Löcher umschließen und m Schnittlinien das Objekt oder die Objekte von Interesse umschließen;
- es wird eine bestimmte Schnittreihenfolge benutzt, um die Löcher von den Objekten von Interesse, also den Clustern, zu trennen.

In Mikro-Dissektionssystemen basierend auf einem umgekehrten Mikroskop, in denen das ausgeschnittene Objekt bzw. der Cluster nach dem Laserschneiden auf der Präparat-Halterung bzw. auf einem Träger, z.B. einem Objektträger oder einer Petrischale, liegen bleibt, können die im Cluster eingeschlossenen Löcher auch nach dem Ausschneiden des eigentlichen Clusters noch ausgeschnitten werden. Wird jedoch mit einem Mikro-Dissektionssystem basierend auf einem aufrechten Mikroskop geschnitten, werden zunächst die innen liegenden Löcher und dann die eigentlichen Cluster ausgeschnitten.

Als besonders vorteilhaft erweist es sich, wenn die Löcher in anderen Auffangbehältern als die eigentlich interessierenden Objekte gesammelt werden. Auf die Weise werden die Löcher als "Abfall" entsorgt und der Reinheitsgrad der Proben erhöht. Ebenso kann es sich bei den Löchern um Objekte oder Bereiche handeln, die selbst für weitere Analysen noch interessant sind und daher separat gesammelt werden.

Eine weitere Ausgestaltung des Verfahrens zeichnet sich dadurch aus, dass zusätzlich ein automatisches Erfassen und Ausschneiden verschiedener Objekte im Präparat auf Basis einer Merkmalsextraktion vorgesehen ist. Dabei sind folgende Schritten möglich:

- Die Merkmale einer Schar von Objekten werden in einem Bild vermessen werden, so dass eine Lasermikrodissektion möglich wird;
- Die Merkmale der gemessenen Objekte werden mit vorgegebenen Wertebereichen, welche individuell zu jedem Merkmal vorgegeben werden, verglichen.

Für den Routinebetrieb im Labor erweist es sich als vorteilhaft, wenn die Wertebereiche, die zum Erkennen und Klassifizieren der Objekte herangezogen werden, in jeglicher Weise gespeichert und geladen und somit ausgetauscht werden können. Hierbei kommen als Speichermedium alle elektronischen Datenträger, Netzwerke, das Internet, geschriebene Dokumente, gesprochene Kommandos etc. in Frage. Die Wertebereiche, die zum Erkennen und Klassifizieren der Objekte herangezogen werden, können in Datenbanken gespeichert und geladen werden. Zusätzlich können die Wertebereiche, die zum Erkennen und Klassifizieren der Objekte herangezogen werden, durch externe Manipulation in Datenbanken oder durch externe Programme geändert und angepasst werden.

In einer besonders vorteilhaften Ausgestaltung können die Wertebereiche, die zum Erkennen und Klassifizieren der Objekte herangezogen werden, auch dazu dienen, mehrere automatische Laserschneidsysteme, welche automatisch Laserschnittlinien bestimmen und welche über ein Daten-Netzwerk zu einem System-Cluster verbunden sind, zu synchronisieren. Dies geschieht derart, dass alle automatischen Laserschneidsysteme unter gleichen Bedingungen arbeiten. Der System-Cluster kann dabei über ein lokales Netzwerk, LAN, WLAN, Bluetooth, Internet, Intranet etc. erfolgen.

Weiterhin kann ein beliebiger Vergleichsformalismus angewendet werden, mit dem Ziel, durch eine Kombination der Einzelvergleiche der gemessenen Objektmerkmalsdaten mit den individuell vorgegebenen Wertebereichen eine eindeutige Identifizierung eines Präparatobjektes zu erreichen.

Dabei können verschiedene Objekte anhand individueller Merkmalsdatensätze erkannt werden. Es ist weiterhin vorteilhaft, dass in einem Arbeitsgang verschiedene Objekte aus dem Präparat ausgeschnitten werden können und in individuell und automatisch bereitgestellten Auffangbehältern für das Schnittgut gesammelt werden.

In einer weiteren vorteilhaften Ausgestaltung des Verfahrens werden Objekte, die den Bildrand "berühren", per Bildanalyse identifiziert und dann nicht von dem Laser ausgeschnitten. Somit wird verhindert, dass ein unvollständiges Objekt bzw. ein unvollständiger Cluster ausgeschnitten wird. Vielmehr wird erreicht, das immer nur vollständig im Bild befindliche Objekte mit dem Laser ausgeschnitten werden.

Durch den zusätzlichen Einsatz mikroskopischer und/oder kameratechnischer Kontrastierverfahren wird durch ein bildgebendes Verfahren, z.B. mittels einer Kamera, ein Präparateauschnitt so geeignet dargeboten, dass auf Basis dieses Bildes unter Verwendung von Bildanalyse die Laserschnittline automatisch bestimmt werden kann.

Weiterhin wird durch Einblenden der automatisch gefundenen Schnittlinien mittels einer Abbildungsvorrichtung eine Kontrolle der Ergebnisse ermöglicht. Die Ergebnisse werden direkt im Kamerabild des Laserschneidsystems oder als Einspiegelung im visuellen Mikroskopbild dargestellt.

Bei der Merkmalsklassifikation der Objekte werden die Objektkonturen über eine Kodierung der geometrischen Kontur der Objekte beschrieben. Dies erfolgt derart, dass die Konturbeschreibung, die aus einer Bildanalyse automatisch oder teilautomatisch erfolgt, direkt auf die Sollschnittlinie und damit die Laserschnittkoordinaten abgebildet werden kann.

In einer weiteren Ausgestaltung des Verfahrens ist für die Objektklassifizierung ein Lernverfahren vorgesehen, welches die benötigten Wertebereiche zur Klassifikation der Objekte, die per Laser ausgeschnitten werden sollen, automatisch oder manuell erfassen kann. Dieses Lernverfahren ist derart aufgebaut, dass die Wertebereiche mittels einer Software eingegeben werden oder mittels einer geeigneten Markierung des Objektes, z.B. durch einen Mausklick im Bild des Präparats, automatisch erfasst werden.

Objekte, die den Bildrand berühren, können nicht vollständig per Laser ausgeschnitten werden. Außerdem besteht wegen der unvollständigen Form die Gefahr der Fehl-Klassifikation. Sie werden daher bei Bedarf ignoriert, indem bei der Objektidentifikation überprüft wird, ob ein Objekt den Bildrand berührt oder nicht. Dann wird das Objekt in Abhängigkeit des Analyseergebnisses vor den weiteren Prozess-Schritten ausgeblendet oder Eine Unabhängigkeit von der Laserwellenlänge wird erreicht, indem die automatische Klassifikation und die Berechnung der Laserschnittlinie durch den Einsatz von laserwellenlängen-unabhängigen, bildgebenden Verfahren erreicht wird. Beispielsweise wird dafür ein Mikroskopbild mit breitbandiger Beleuchtung, z. B. im sichtbaren Spektralbereich, aufgenommen und verarbeitet.

Durch geeignete Skalierung der Laserschnittlinie wird erreicht, dass die Objekt-Klassifikation und die Laserschnittlinienbestimmung bei niedriger Vergrößerung vorgenommen werden kann. Dadurch steht ein größeres Sehfeld zur Verfügung, welches mehr Objekte zu detektieren gestattet. Dadurch kann dann der eigentliche Ausschneideprozess bei einer höheren Vergrößerung vorgenommen werden.

Durch den Einsatz von Piezoaktoren für die x-y-Verschiebung des Präparats wird die Genauigkeit des Laserschnittes erhöht. Zusätzlich erweist es sich als vorteilhaft, wenn durch die Verwendung von x-y-Verstelleinrichtungen das Objekt und dessen Laserschnittlinie in der Nähe der optischen Achse positioniert werden, um so optimale Schneidbedingungen zu bekommen. Dabei wird der Ausschneideprozess von der Ablenkeinheit in der Auflichtachse des Mikroskops vorgenommen, während der Tisch die auszuschneidenden Objekte automatisch nahe der optischen Achse positioniert. Durch den Einsatz einer geeigneten Linearkombination von Bewegungen durch Mikroskoptisch, x-y-Piezotranslator und Ablenkeinheit für den Laserschnitt wird eine Vergrößerung der Schnütgeschwindigkeit bei gleichzeitiger Erhöhung der Schnittpräzision erzielt.

Durch den Einsatz eines Autofokus wird der schneidende Laserstrahl immer in die optimale Schnittposition gebracht wird und daher ein automatisierter Auschneideprozess von beliebig vielen Objekten ohne Überwachung durch einen Benutzer ermöglicht. Die Geschwindigkeit des Systems wird weiterhin durch den Einsatz eines Autofokus in Verbindung mit einem z-Piezotranslator und/oder einen z-Galvanoantrieb wesentlich erhöht. Dabei wird durch den z-Piezotranslator und/oder den z-Galvanoantrieb das Objektiv direkt in z-Richtung verstellt. Auf diese Weise kann ein automatisierter Auschneideprozess von beliebig vielen Objekten ohne Überwachung durch einen Benutzer erfolgen.

Eine weitere Ausgestaltung des Verfahrens weist zusätzlich eine automatische Veränderung des Abstands der Laserschnittlinie vom Objekt zum Zwecke des artefaktfreien Ausschneidens auf. Dazu werden die Koordinaten der einzelnen Punkte der Soll-Schnittlinie durch eine geeignete bildanalytische Bearbeitung der Bildobjekte vor der eigentlichen LaserSchnittlinienbestimmung so bearbeitet, dass die bearbeitete Soll-Schnittlinie in größerem Abstand vom segmentierten Objekt verläuft. Vorzugsweise erfolgt dazu eine Dilatation des Binärbildes des segmentierten Objektes vor der Schnittlinienberechnung, so dass ein determiniertes Vergrößern des Objektes um die gewünschte Anzahl von Pixeln durchgeführt wird. Die vergrößerten Objekte dienen sodann als Grundlage der Laser-Schnittlinienberechnung wie vorab beschrieben.

Die Koordinaten der einzelnen Punkte der Laserschnittlinie werden durch eine geeignete Skalierungstransformation vergrößert, so dass beim eigentlichen Laserschnitt der Laserstrahls in gesicherter Entfernung um das Objekt herumgeführt wird. Dazu wird der Laserabstand durch ein Softwareinterface durch den Benutzer eingestellt, um z.B. dem Benutzer das Testen von Systemeinstellungen zu erlauben, insbesondere in Hinblick auf die Prozessautomatisierung. Der Laserabstand wird automatisch berechnet und eingestellt wird, um so vollautomatische Prozesse zu ermöglichen.

Eine weitere Ausgestaltung des Verfahrens weist zusätzlich einen Ausgleich von Abbildungsfehlern (z.B. Verzerrungen) bei der Abbildung des Lasers auf das Präparat auf. Dazu wird der Skalierungsfaktor ortsabhängig formuliert. Alternativ oder zusätzlich wird jeder Laserschnittlinien-Konturpunkt individuell so verzerrt, dass eine Kompensation von Abbildungsfehlern des Mikroskopsystems und der Kameraoptik, also aller Abbildungselemente, erfolgt. Auf diese Weise wird die ermittelte Soll-Schnittlinie präzise und ohne Abbildungsfehler in eine Laserschnittlinie umgesetzt.

Eine weitere Ausgestaltung des Verfahrens weist zusätzlich eine Manipulation, Linearkombination und Fehlerkompensation der Laserschnittlinien, die zuvor automatisch oder manuell oder von einem Datenträger eingelesen wurden, auf. Dazu sind folgende Schritte möglich:

Zur Kompensation eines lateralen Fehlers bei den nach obigem Verfahren errechneten Laserschnittlinien wird eine Matrixtransformation zum Zwecke der Translation aller Laserschnittlinienpunkte um einen bestimmten Betrag in x und y Richtung angewendet. Weiterhin kann auf die nach obigem Verfahren errechneten Laserschnittlinien eine Matrixtransformation zum Zwecke der Skalierung aller Laserschnittlinienpunkte um einen bestimmten Betrag in x- und y-Richtung angewendet werden. Alternativ oder zusätzlich wird auf die nach obigem Verfahren errechneten Laserschnittlinien eine Matrixtransformation zum Zwecke der Rotation aller Laserschnittlinienpunkte um einen bestimmten Betrag in x- und y- Richtung angewendet.

In einer speziellen Ausgestaltung wird auf die nach obigem Verfahren errechneten Laserschnittlinien eine beliebige Kombination von Matrixtransformationen zum Zwecke der schrittweisen Translation und/oder Skalierung und/ oder Rotation aller Laserschnittlinienpunkte um einen bestimmten Betrag in x- und y-Richtung angewendet.

Durch Einsatz von Matrixtransformationen werden, speziell der Translationsmatrix, ungenaue Mikroskoptisch-Repositionierungen (=Wiederauffinden von Mikroskoptisch-Positionen) kompensiert. Dazu wird die ermittelte Laserschnittlinie um einem bestimmten Betrag dx, dy, welcher dem Ungenauigkeitsbetrag der Mikroskoptisch-Repositionierung entspricht, korrigiert. Die Kompensationen werden durch direkte Manipulation der Koordinatenmatrix eines Laserschnittlinien-Musters durchgeführt, also ohne aktive Tischbewegung, sondern werden allein durch die Ablenkeinheit des Lasers in der Auflichtachse des Mikroskops bewerkstelligt.

Durch Wiederholen beliebig vieler Laserschnittlinien-Muster wird ein Array von Laserschnittlinien per zyklisch wiederholter Matrixtransformation in beliebigen Mustern erzeugt. Dies ermöglicht eine statistische Entnahme großer, gleichartig geformter Proben aus einem Präparat.

Die Manipulationsfaktoren, Linearkombinationen und Fehlerkompensationsfaktoren können in einer geeigneten Weise auf elektronischen Datenträgern oder in Datenbanken etc. abgespeichert und wieder aufgerufen werden. Damit kann ein benutzerspezifisches Geräteprofil abgelegt und beliebig wieder aufgerufen werden.

**Bezugszeichenliste**

1. Mikroskop
2. verfahrbarer x-y-Tisch
3. Präparatehalter
4. Präparat
5. Beleuchtungssystem
6. Laser
7. Laserstrahl
8. Mikroskopstativ
9. Objektiv
10. optische Achse
11. Kondensor
12. Okular
13. optisches System
14. Blende
15. Blenden-Motor
16. Rechner
17. Kamera
18. Monitor
19. Auffangbehältnis
20. Beleuchtungsstrahlengang

21. Abbildungsstrahlengang
22. Laser-Scan-Einrichtung
23. Motor für Laser-Scan-Einrichtung
24. Steuerungseinheit
25. Objekt 1
26. Objekt 2
27. Objekt 3
28. Objekt 1 mit Grauwert 1
29. Objekt 2 mit Grauwert 2
30. Objekt 3 mit Grauwert 3
31. Objekt 4 mit Grauwert 4
32. Nachbarpixel
33. Zentralpixel
34. Objekt (e)
35. Cluster
36. Außenschnittlinie
37. Loch
38. Innenschnittlinie

**Patentansprüche**

1. Verfahren zur Laser-Mikrodissektion, in dem ein elektronisches Bild zumindest eines Bildausschnittes eines mikroskopischen Präparats aufgenommen wird, der Bildausschnitt bildanalytisch bearbeitet wird und mindestens ein auszuschneidendes Objekt automatisch ermittelt wird, bei dem zu dem auszuschneidenden Objekt in dem Präparat eine Soll-Schnittlinie markiert und anschließend das Objekt mittels einer Relativbewegung zwischen Laserstrahl und Präparat ausgeschnitten wird, indem der Laser eine Laserschnittlinie erzeugt, **dadurch gekennzeichnet,**

   - **dass** für das ermittelte Objekt über eine automatische Konturberechnung eine individuelle und geschlossene Begrenzungslinie erzeugt wird,
   - aus der die Soll-Schnittlinie um das mindestens eine auszuschneidende Objekt automatisch bestimmt wird.

2. Verfahren nach Anspruch 1, **dadurch gekennzeichnet, dass** das elektronische Bild mittels eines kameratechnischen Kontrastierverfahrens oder eines Mikroskopie-Kontrastierverfahrens für die nachfolgende bildanalytische Bearbeitung vorbereitet wird.

3. Verfahren nach Anspruch 1, **dadurch gekennzeichnet,**
   **dass** das Ermitteln eines oder mehrerer Objekte durch Segmentation des elektronischen Bildes erfolgt,

   - indem auf der Basis des elektronischen Bildes eine Grauwert-Schwelle definiert wird,
   - und indem das elektronische Bild durch Vergleich mit der Grauwert-Schwelle in ein Binärbild überführt wird, in welchem nur noch die segmentierten Objekte enthalten sind.

4. Verfahren nach Anspruch 3, **dadurch gekennzeichnet,**
   **dass** der Schwellenwert manuell eingestellt wird oder durch ein Entropiemaximierungsverfahren automatisch bestimmt wird.

5. Verfahren nach Anspruch 1, **dadurch gekennzeichnet,**
   **dass** das elektronische Bild entweder ein Graubild oder ein Farbbild ist.

6. Verfahren nach Anspruch 3, **dadurch gekennzeichnet,**

   - **dass** zur Ermittlung des auszuschneidenden Objekts bestimmte Klassifikationsmerkmale definiert werden, welche das Objekt charakterisieren,
   - **dass** bildanalytisch die tatsächlich vorhandenen Objektmerkmale des segmentierten Objekts aus dem Bild bestimmt und mit den Klassifikationsmerkmalen verglichen werden,
   - und **dass** bei Übereinstimmung der Objektmerkmale mit den Klassifikationsmerkmalen das Objekt klassifiziert wird.

7. Verfahren nach Anspruch 6, **dadurch gekennzeichnet, dass** für verschiedene Objekttypen jeweils individuelle Merkmalsdatensätze mit Klassifikationsmerkmalen definiert werden.

8. Verfahren nach Anspruch 6, **dadurch gekennzeichnet,**
**dass** die Definition der Klassifikationsmerkmale in einem Lernverfahren automatisch oder manuell erfolgt, indem die Klassifikationsmerkmale interaktiv eingegeben werden oder mittels einer geeigneten Markierung des Objektes, z.B. durch einen Mausklick, automatisch erfasst werden.

9. Verfahren nach Anspruch 6, **dadurch gekennzeichnet,**
**dass** zu den klassifizierten Objekten die Soll-Schnittlinie automatisch bestimmt wird und dass nicht klassifizierte Objekte von der Bestimmung einer Soll-Schnittlinie ausgeschlossen werden.

10. Verfahren nach Anspruch 6, **dadurch gekennzeichnet, dass** zu mindestens einem Klassifikationsmerkmal ein Wertebereich definiert wird.

11. Verfahren nach Anspruch 6, **dadurch gekennzeichnet, dass** Objekte, die an den Rand des Bildausschnittes angrenzen oder nur teilweise im Bildausschnitt sichtbar sind, durch Merkmalsvergleich identifiziert werden und dann von der Bestimmung einer Soll-Schnittlinie ausgeschlossen werden.

12. Verfahren nach Anspruch 1, **dadurch gekennzeichnet,**

- **dass** mehrere, zusammenliegende Objekte zu einem sogenannten Cluster zusammengefasst werden,
- und **dass** eine einzige gemeinsame Soll-Schnittlinie, die das Cluster umschließt, automatisch bestimmt wird.

13. Verfahren nach Anspruch 1, **dadurch gekennzeichnet,**

- **dass** in einem zusätzlichen Verfahrensschritt die automatisch bestimmte Soll-Schnittlinie durch eine mathematische Transformation automatisch auf eine Laserschnittlinie abgebildet wird,
- und **dass** diese Laserschnittlinie in eine Relativbewegung zwischen Laserstrahl und Präparat umgesetzt wird, wodurch ein Laserschnitt entsteht.

14. Verfahren nach Anspruch 13, **dadurch gekennzeichnet,**
**dass** die Relativbewegung und somit der Laserschnitt entweder interaktiv von einem Benutzer oder automatisch ausgelöst wird.

15. Verfahren nach Anspruch 13, **dadurch gekennzeichnet,**
**dass** die automatische Erzeugung der Laserschnittlinie mit folgenden Verfahrensschritten vorgenommen wird:

- bildanalytische Bestimmung der Außenkontur des auszuschneidenden Objekts oder Clusters,
- Umsetzung der Außenkontur in einen numerischen Code, der die Soll-Schnittlinie angibt,
- und Transformieren der Soll-Schnittlinie in die Laserschnittlinie.

16. Verfahren nach Anspruch 15, **dadurch gekennzeichnet,**
**dass** als numerischer Code ein Freeman-Code oder ein Kettencode angegeben wird.

17. Verfahren nach Anspruch 1, **dadurch gekennzeichnet,**
**dass** zusätzlich eine automatische Shadingkorrektur vorgesehen ist mit folgenden Schritten:

- Aufnehmen eines Leerbildes, das heißt eines Bildes ohne Präparat;
- Abspeichern dieses Bildes als Shadingkorrekturbild;
- und Verrechnen des Shadingkorrekturbildes mit den nachfolgend aufgenommenen Bildern.

18. Verfahren nach Anspruch 1, **dadurch gekennzeichnet,**
**dass** bestimmte unerwünschte Objekte, die nicht ausgeschnitten werden sollen, durch bildanalytische Morphologie aus dem Binärbild entfernt werden.

19. Verfahren nach Anspruch 1, **dadurch gekennzeichnet,**
**dass** ein Durchschneiden benachbarter Objekte mit einem definierten Abstand im Präparat verhindert wird.

20. Verfahren nach Anspruch 12, **dadurch gekennzeichnet,**
**dass** mindestens ein von einem Cluster umschlossener Bereich, der nicht zu dem gewünschten Cluster gehört, separat ausgeschnitten wird.

21. Verfahren nach Anspruch 1, **dadurch gekennzeichnet,**
**dass** zur Kontrolle der Ergebnisse des Verfahrens die automatisch gefundenen Soll-Schnittlinien mittels einer Abblidungsvorrichtung in das elektronische Bild eingeblendet werden.

22. Verfahren nach Anspruch 1, **dadurch gekennzeichnet,**
**dass** eine Skallerung der Laserschnittlinie in Abhängigkeit von der Vergrößerung des Bildes vorgenommen wird.

23. Verfahren nach Anspruch 1, **dadurch gekennzeichnet,**
**dass** ein Abstand der Laserschnittilnie vom Objekt definiert wird, um das Objekt vor Beschädigung durch Laserbestrahlung zu schützen.

24. Verfahren nach Anspruch 1, **dadurch gekennzeichnet,**
**dass** durch Modifikation der Soll-Schnittlinie ungenaue Mikroskoptisch-Repositionierungen kompensiert werden.

**Claims**

1. Method for laser microdissection, in which an electronic image of at least an image section of a microscopic preparation is recorded, the image section is processed by image-analysis means and at least one object to be cut out is automatically ascertained, in which a predetermined cutting line is marked with respect to the object to be cut out in the preparation and subsequently the object is cut out using a relative movement between laser beam and preparation, by the laser producing a laser cutting line, **characterized in that**

   - an individual and closed delimitation line is produced via an automatic contour calculation for the ascertained object,
   - from which delimitation line the predetermined cutting line around the at least one object to be cut out is automatically determined.

2. Method according to Claim 1, **characterized in that** the electronic image is prepared for the subsequent processing by image-analysis means using a camera-technological contrasting method or a microscopy contrasting method.

3. Method according to Claim 1, **characterized in that** one or more objects are ascertained by segmentation of the electronic image,

   - by defining a grey-scale value threshold on the basis of the electronic image,
   - and by converting the electronic image into a binary image by way of comparison with the grey-scale value threshold, which binary image only contains the segmented objects.

4. Method according to Claim 3, **characterized in that** the threshold value is set manually or is automatically determined by an entropy maximization method.

5. Method according to Claim 1, **characterized in that** the electronic image is either a grey image or a colour image.

6. Method according to Claim 3, **characterized in that**

   - specific classification features are defined in order to ascertain the object to be cut out, which classification features characterize the object,
   - the actually present object features of the segmented object are determined from the image by image-analysis means and are compared with the classification features,
   - and, if the object features match the classification features, the object is classified.

**7.** Method according to Claim 6, **characterized in that** in each case individual feature data sets with classification features are defined for different object types.

**8.** Method according to Claim 6, **characterized in that** the classification features are defined automatically or manually in a learning method by interactively inputting the classification features, or by way of the classification features being captured automatically by appropriately marking of the object, for example by a mouse click.

**9.** Method according to Claim 6, **characterized in that** the predetermined cutting line with respect to the classified objects is automatically determined and **in that** non-classified objects are excluded from the determination of a predetermined cutting line.

**10.** Method according to Claim 6, **characterized in that** a value range is defined with respect to at least one classification feature.

**11.** Method according to Claim 6, **characterized in that** objects which adjoin the edge of the image section or are visible only partially in the image section are identified by a feature comparison and are then excluded from the determination of a predetermined cutting line.

**12.** Method according to Claim 1, **characterized in that**

- a plurality of objects which are situated close to one another are combined into a cluster,
- and a single common predetermined cutting line surrounding the cluster is automatically determined.

**13.** Method according to Claim 1, **characterized in that**

- in an additional method step the automatically determined predetermined cutting line is automatically imaged onto a laser cutting line by a mathematical transformation,
- and this laser cutting line is realized by a relative movement between laser beam and preparation, which produces a laser cut.

**14.** Method according to Claim 13, **characterized in that** the relative movement and thus the laser cut is triggered either interactively by a user or automatically.

**15.** Method according to Claim 13, **characterized in that** the laser cutting line is automatically produced by way of the following method steps:

- determination by image-analysis means of the outer contour of the object or cluster to be cut out,
- converting the outer contour into a numerical code which specifies the predetermined cutting line,
- and transformation of the predetermined cutting line into the laser cutting line.

**16.** Method according to Claim 15, **characterized in that** a Freeman code or a chain code is specified as the numerical code.

**17.** Method according to Claim 1, **characterized in that** additionally an automatic shading correction is provided, having the following steps:

- recording an empty image, that is to say an image without the preparation;
- storing this image as a shading correction image;
- and performing a calculation involving the shading correction image and the subsequently recorded images.

**18.** Method according to Claim 1, **characterized in that** specific undesired objects which are not intended to be cut out are removed from the binary image by image-analysis morphology.

**19.** Method according to Claim 1, **characterized in that** cutting through adjacent objects at a defined distance in the preparation is prevented.

**20.** Method according to Claim 12, **characterized in that** at least one region which is surrounded by a cluster and does not belong to the desired cluster, is cut out separately.

24

**21.** Method according to Claim 1, **characterized in that** the automatically found predetermined cutting lines are superposed on the electronic image using an imaging apparatus in order to inspect the results of the method.

**22.** Method according to Claim 1, **characterized in that** the laser cutting line is scaled in dependence on the enlargement of the image.

**23.** Method according to Claim 1, **characterized in that** a distance between the laser cutting line and the object is defined in order to protect the object against damage by laser irradiation.

**24.** Method according to Claim 1, **characterized in that** imprecise microscope stage repositioning is compensated for by modification of the predetermined cutting line.


**Revendications**

**1.** Procédé de microdissection par laser dans lequel une image électronique d'au moins une section d'image d'une préparation microscopique est acquise, la section d'image est traitée par analyse d'image et au moins un objet à découper est déterminé automatiquement, dans lequel une ligne de découpe nominale est marquée relativement à l'objet à découper dans la préparation et l'objet est ensuite découpé par l'intermédiaire d'un déplacement relatif entre le faisceau laser et la préparation, le laser générant une ligne de découpe au laser,
**caractérisé en ce que**,

- pour l'objet déterminé, une ligne de séparation individuelle et fermée est générée par calcul automatique de contour,
- à partir de laquelle la ligne de découpe nominale autour de l'au moins un objet à découper est déterminée automatiquement.

**2.** Procédé selon la revendication 1, **caractérisé en ce que** l'image électronique est préparée au moyen d'un procédé d'augmentation du contraste du type technique de caméra ou d'un procédé d'augmentation du contraste du type microscopie pour le traitement par analyse d'image effectué par la suite.

**3.** Procédé selon la revendication 1, **caractérisé en ce que** la détermination d'un ou de plusieurs objets par segmentation de l'image électronique est effectuée

- en définissant un seuil de valeur de gris sur la base de l'image électronique,
- et en transformant l'image électronique par comparaison au seuil de valeur de gris en une image binaire qui ne contient plus que les objets segmentés.

**4.** Procédé selon la revendication 3, **caractérisé en ce que** la valeur de seuil est réglée manuellement ou est déterminée automatiquement par un procédé de maximisation d'entropie.

**5.** Procédé selon la revendication 1, **caractérisé en ce que** l'image électronique est soit une image en niveaux de gris soit un image en couleurs.

**6.** Procédé selon la revendication 3, **caractérisé en ce que**

- pour déterminer l'objet à découper, certaines caractéristiques de classification qui caractérisent l'objet sont définies,
- les caractéristiques d'objet réellement présentes de l'objet segmenté sont déterminées par analyse d'image à partir de l'image et sont comparées aux caractéristiques de classification,
- et en cas de concordance entre les caractéristiques d'objet et les caractéristiques de classification, l'objet est classé.

**7.** Procédé selon la revendication 6, **caractérisé en ce que** des enregistrements de données de caractéristiques individuels respectifs sont définis avec des caractéristiques de classification.

**8.** Procédé selon la revendication 6, **caractérisé en ce que** la définition des caractéristiques de classification s'effectue lors d'un processus d'apprentissage automatiquement ou manuellement, en faisant en sorte que les caractéristiques de classification soient introduites de manière interactive ou soient détectées automatiquement par l'intermédiaire d'un marquage approprié de l'objet, par exemple par un clic de souris.

9. Procédé selon la revendication 6, **caractérisé en ce que** la ligne de découpe nominale est déterminée automatiquement relativement aux objets classés et **en ce que** des objets non classés sont exclus de la détermination d'une ligne de découpe nominale.

10. Procédé selon la revendication 6, **caractérisé en ce qu'**un domaine de valeurs est défini pour au moins une caractéristique de classification.

11. Procédé selon la revendication 6, **caractérisé en ce que** des objets qui sont adjacents au bord de la section d'image ou qui sont seulement partiellement visibles dans la section d'image sont identifiés par comparaison de caractéristiques puis sont exclus de la détermination d'une ligne de découpe nominale.

12. Procédé selon la revendication 1, **caractérisé en ce que**

- une pluralité d'objets groupés sont combinés **en ce que** l'on désigne sous le nom d'agrégat,
- et **en ce qu'**une ligne de découpe nominale commune unique entourant l'agrégat est déterminée automatiquement.

13. Procédé selon la revendication 1, **caractérisé en ce que** :

- lors d'une étape de procédé supplémentaire, la ligne de découpe nominale déterminée automatiquement est automatiquement mise sous forme d'image sur une ligne de découpe au laser par une transformation mathématique,
- et **en ce que** cette ligne de découpe au laser est réalisée par un déplacement relatif entre le faisceau laser et l'échantillon, cela conduisant à une découpe au laser.

14. Procédé selon la revendication 13, **caractérisé en ce que** :

le déplacement relatif, et par conséquent, la découpe au laser, sont déclenchés soit de manière interactive par un utilisateur, soit automatiquement.

15. Procédé selon la revendication 13, **caractérisé en ce que** la génération automatique de la ligne de découpe au laser est effectuée conformément à des étapes de procédé qui consistent à :

- déterminer par analyse d'image le contour extérieur de l'objet ou de l'agrégat à découper,
- convertir le contour extérieur en un code numérique qui est représentatif de la ligne de découpe nominale,
- et transformer la ligne de découpe nominale en la ligne de découpe au laser.

16. Procédé selon la revendication 15, **caractérisé en ce qu'**un code de Freeman ou un code d'enchaînement est spécifié en tant que code numérique.

17. Procédé selon la revendication 1, **caractérisé en ce qu'**il est en outre prévu une correction automatique d'ombrage comprenant les étapes consistant à :

- enregistrer une image vierge, c'est-à-dire une image sans préparation ;
- mémoriser cette image en tant qu'image de correction d'ombrage ;
- et calculer l'image de correction d'ombrage à partir des images acquises par la suite.

18. Procédé selon la revendication 1, **caractérisé en ce que** certains objets indésirables ne devant pas être découpés sont éliminés de l'image binaire par morphologie par analyse d'image.

19. Procédé selon la revendication 1, **caractérisé en ce qu'**un découpage d'objets adjacents est évité dans la préparation grâce à une distance de séparation définie.

20. Procédé selon la revendication 12, **caractérisé en ce qu'**au moins une région entourée par un agrégat et n'appartenant pas à l'agrégat souhaité est découpée séparément.

**21.** Procédé selon la revendication 1, **caractérisé en ce que**, pour contrôler les résultats du procédé, les lignes de découpe nominales trouvées automatiquement sont fusionnées à l'image électronique au moyen d'un dispositif de formation d'image.

**22.** Procédé selon la revendication 1, **caractérisé en ce qu'**une modification d'échelle de la ligne de découpe au laser est effectuée en fonction de l'agrandissement de l'image.

**23.** Procédé selon la revendication 1, **caractérisé en ce qu'**une distance de séparation est définie entre la ligne de découpe au laser et l'objet afin de protéger l'objet d'un endommagement provoqué par le rayonnement laser.

**24.** Procédé selon la revendication 1, **caractérisé en ce que** des repositionnements microscopiques imprécis sont compensés par modification de la ligne de découpe nominale.

Merkmalsraum

Fig. 1.1

1.

**Bildaufnahme**

2.

**Shadingkorrektur**

3.

**Graubildbearbeitung**

4.

**Schwellenwert**
**→ Übergang zum Binärbild**

Schwellwert - Binärbilderzeugung

5.

**Binärbildbearbeitung**

Endpunkt    Gabelpunkt

Linienpunkt    Loch

6.

**Segmentation + Bestimmung**
**der Objektmerkmale**

7.

**Objektklassifizierung**

8.

**Automatische**
**Schnittlinienbestimmung**
**für den Laser**

# Fig. 1.2

**Fig. 1.3**

**Fig. 1.4**

Fig. 1.5

(x, y)

| | | | | | | | | | | |
|---|---|---|---|---|---|---|---|---|---|---|
| 0,0 | 1,0 | 2,0 | 3,0 | 4,0 | 5,0 | 6,0 | 7,0 | 8,0 | 9,0 | 10,0 |
| 0,1 | 1,1 | 2,1 | 3,1 | 4,1 | 5,1 | 6,1 | 7,1 | 8,1 | 9,1 | 10,1 |
| 0,2 | 1,2 | 2,2 | 3,2 | 4,2 | 5,2 | 6,2 | 7,2 | 8,2 | 9,2 | 10,2 |
| 0,3 | 1,3 | 2,3 | 3,3 | 4,3 | 5,3 | 6,3 | 7,3 | 8,3 | 9,3 | 10,3 |
| 0,4 | 1,4 | 2,4 | 3,4 | 4,4 | 5,4 | 6,4 | 7,4 | 8,4 | 9,4 | 10,4 |
| 0,5 | 1,5 | 2,5 | 3,5 | 4,5 | 5,5 | 6,5 | 7,5 | 8,5 | 9,5 | 10,5 |
| 0,6 | 1,6 | 2,6 | 3,6 | 4,6 | 5,6 | 6,6 | 7,6 | 8,6 | 9,6 | 10,6 |
| 0,7 | 1,7 | 2,7 | 3,7 | 4,7 | 5,7 | 6,7 | 7,7 | 8,7 | 9,7 | 10,7 |

EP 1 676 116 B1

Fig. 1.6

Fig. 1.7

Fig. 1.7b

Fig. 1.7a

Fig. 1.7c

Diagonalen

Geraden

Freeman Code

... usw.

**Fig. 2**

**IN DER BESCHREIBUNG AUFGEFÜHRTE DOKUMENTE**

**In der Beschreibung aufgeführte Patentdokumente**

- US 5998129 A
- DE 10043506 C1
- DE 10018251 C2

**In der Beschreibung aufgeführte Nicht-Patentliteratur**

- **H. Rohling.** Einführung in die Informations-und Codierungstheorie. Teubner Verlag, 1995
- **Sierra, J.** Image Analysis and Mathematical Morphology. Academic Press, 1988
- **Serra, J.** Image Analysis and Mathematical Morphology. Academic Press, 1988